# EUROPEAN PATENT APPLICATION

(11) **EP 4 561 235 A1**
(43) Date of publication of application: **28.05.2025**
(21) Application number: 22951993.9
(22) Date of filing: 21.07.2022
(51) Int. Cl.: H04W 72/0453, H04W 72/0457

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN)
(74) Representative: Hoffmann Eitle
(86) International application number: PCT/JP2022/028409
(87) International publication number: WO 2024/018609

(57) **Abstract**

A terminal according to an aspect of the present disclosure includes: a receiving section that receives one or more serving cell configurations for a serving cell and an additional cell; and a control section that controls, based on the one or more serving cell configurations, transmission/reception to/from at least one of the serving cell and the additional cell, wherein each of the one or more serving cell configurations includes a plurality of bandwidth part (BWP) related configurations and each of the plurality of BWP related configurations corresponds to at least one of the serving cell and the additional cell. An aspect of the present disclosure enables configuration related to a cell to be appropriately performed.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement, and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and the like) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For radio communication systems, it is studied that one or a plurality of cells/transmission/reception points (TRPs) (multi-TRP (MTRP)) perform downlink (DL) transmission for a terminal (user terminal, User Equipment (UE)).

In a case of applying multi-TRP, with signaling of at least one of layer 1 and layer 2, a serving cell may be switched to a cell (additional cell) having a PCI different from that of the serving cell (L1/L2 inter-cell mobility (layer1/layer2 inter-cell mobility)). In a case of performing cell switch, however, unless configuration related to a cell (serving cell/additional cell) is appropriately performed, a problem such as reduction in communication throughput may be caused.

In view of this, an object of the present disclosure is to provide a terminal, a radio communication method, and a base station that enable configuration related to a cell to be appropriately performed.

### Solution to Problem

A terminal according to an aspect of the present disclosure includes: a receiving section that receives one or more serving cell configurations for a serving cell and an additional cell; and a control section that controls, based on the one or more serving cell configurations, transmission/reception to/from at least one of the serving cell and the additional cell, wherein each of the one or more serving cell configurations includes a plurality of bandwidth part (BWP) related configurations and each of the plurality of BWP related configurations corresponds to at least one of the serving cell and the additional cell.

### Advantageous Effects of Invention

An aspect of the present disclosure enables configuration related to a cell to be appropriately performed.

### Brief Description of Drawings

[FIG. 1] FIGS. 1A to 1D are diagrams to show configuration examples of multi-TRP.
[FIG. 2] FIG. 2A is a diagram to show an example of movement of a UE in Rel. 17. FIG. 2B is a diagram to show an example of movement of a UE in Rel. 18.
[FIG. 3] FIG. 3 is a diagram to show an example of association between serving cells and candidate cells.
[FIG. 4] FIG. 4A is a diagram to show a first example of ServingCellConfig of Option 1. FIG. 4B is a diagram to show a second example of ServingCellConfig of Option 1.
[FIG. 5] FIG. 5 is a diagram to show a first example of Option 2.
[FIG. 6] FIG. 6A is a diagram to show a second example of Option 2. FIG. 6B is a diagram to show a third example of Option 2.
[FIG. 7] FIG. 7 is a diagram to show an example of a MAC entity/HARQ entity re-using a CA/DC framework.
[FIG. 8] FIGS. 8A to 8C are diagrams to show examples of a cell group configuration corresponding to FIG. 7.
[FIG. 9] FIG. 9 is a diagram to show an example of serving cell change.
[FIG. 10] FIG. 10A is a diagram to show Serving Cell Switch Example 1. FIG. 10B is a diagram to show Serving Cell Switch Example 2.
[FIG. 11] FIG. 11 is a diagram to show an example of association between tags and candidate cells.
[FIG. 12] FIG. 12 is a diagram to show a configuration example of ServingCellConfig of a cell (CC).
[FIG. 13] FIG. 13 is a diagram to show a configuration example of ServingCellConfig according to a first embodiment.
[FIG. 14] FIG. 14 is a diagram to show a configuration example of ServingCellConfig according to Embodiment 1-1.
[FIG. 15] FIG. 15 is a diagram to show a configuration example of ServingCellConfig according to Embodiment 1-2.
[FIG. 16] FIG. 16 is a diagram to show a serving cell configuration of Example 1.
[FIG. 17] FIG. 17 is a diagram to show a cell group configuration (CellGroupConfig) of Example 2.
[FIG. 18] FIG. 18 is a table to show PCI numbers and serving cell configuration numbers of Example 2.
[FIG. 19] FIGS. 19A to 19C are variations of a table, configured per band/cell group, showing PCI numbers and serving cell configurations.
[FIG. 20] FIG. 20 is a diagram to show a fourth example of a table showing a relation between PCI numbers and serving cell configurations.
[FIG. 21] FIG. 21 is a diagram to show an example of a serving cell configuration according to Embodiment 2-1.
[FIG. 22] FIG. 22 is a diagram to show an overview of Embodiment 2-2.
[FIG. 23] FIG. 23 is a diagram to show an example of ServingCellConfig according to a third embodiment.
[FIG. 24] FIG. 24A is a diagram to show a C-RNTI MAC CE in Rel. 16. FIG. 24B is a diagram to show a C-RNTI MAC CE according to a fourth embodiment.
[FIG. 25] FIG. 25 is a diagram to show a C-RNTI MAC CE of a variation of the fourth embodiment.
[FIG. 26] FIG. 26 is a diagram to show a configuration example of a C-RNTI according to Embodiment 4-2.
[FIG. 27] FIG. 27 is a diagram to show an example of a schematic structure of a radio communication system according to one embodiment.
[FIG. 28] FIG. 28 is a diagram to show an example of a structure of a base station according to one embodiment.
[FIG. 29] FIG. 29 is a diagram to show an example of a structure of a user terminal according to one embodiment.
[FIG. 30] FIG. 30 is a diagram to show an example of a hardware structure of the base station and the user terminal according to one embodiment.
[FIG. 31] FIG. 31 is a diagram to show an example of a vehicle according to one embodiment.

### Description of Embodiments

### (Multi-TRP)

For NR, it is studied that one or a plurality of transmission/reception points (TRPs) (multi-TRP) perform DL transmission to a UE by using one or a plurality of panels (multi-panel). It is also studied that the UE performs UL transmission to the one or plurality of TRPs.

Note that the plurality of TRPs may correspond to the same cell identifier (ID) or may correspond to different cell IDs. The cell ID may be a physical cell ID or a virtual cell ID.

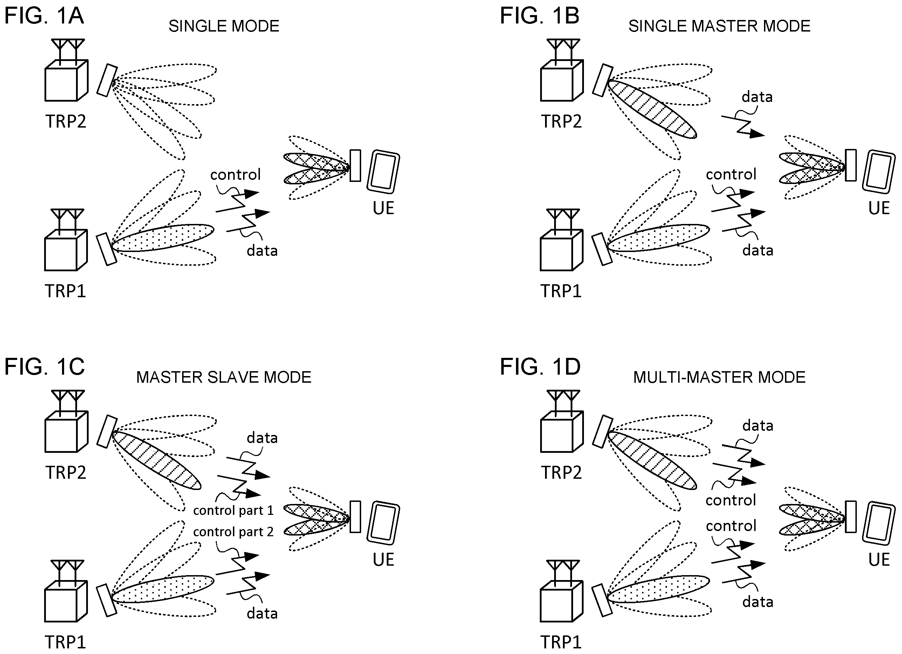

FIGS. 1A to 1D are diagrams to show examples of a multi-TRP scenario. In these examples, it is assumed that the TRPs are each possible to transmit four different beams, but the examples are not limited to this.

FIG. 1A shows an example of a case (which may be referred to as single mode, single TRP, or the like) that only one TRP (TRP 1 in this example) out of multi-TRP performs transmission to a UE. In this case, TRP 1 transmits both a control signal (PDCCH) and a data signal (PDSCH) to the UE.

FIG. 1B shows an example of a case (which may be referred to as single master mode) that only one TRP (TRP 1 in this example) out of multi-TRP transmits a control signal to a UE and the multi-TRP transmits data signals. The UE receives, based on one piece of downlink control information (DCI), the respective PDSCHs transmitted from the multi-TRP.

FIG. 1C shows an example of a case (which may be referred to as master slave mode) that each TRP of multi-TRP transmits a part of a control signal to a UE and the multi-TRP transmits data signals. TRP 1 may transmit part 1 of the control signal (DCI) and TRP 2 may transmit part 2 of the control signal (DCI). Part 2 of the control signal may depend on part 1. The UE receives, based on these parts of the DCI, the respective PDSCHs transmitted from the multi-TRP.

FIG. 1D shows an example of a case (which may be referred to as multi-master mode) that each TRP of multi-TRP transmits a separate control signal to a UE and the multi-TRP transmits data signals. TRP 1 may transmit a first control signal (DCI) and TRP 2 may transmit a second control signal (DCI). The UE receives, based on these pieces of DCI, the respective PDSCHs transmitted from the multi-TRP.

In a case where a plurality of PDSCHs (which may be referred to as multi-PDSCH (multiple PDSCHs)) from multi-TRP as shown in FIG. 1B are scheduled by using one piece of DCI, the DCI may be referred to as single DCI (S-DCI, single PDCCH). In a case where a plurality of PDSCHs from multi-TRP as shown in FIG. 1D are respectively scheduled by using a plurality of pieces of DCI, the plurality of pieces of DCI may be referred to as multi-DCI (M-DCI, multi-PDCCH (multiple PDCCHs)).

From respective TRPs of the multi-TRP, different transport blocks (TBs)/codewords (Code Words (CWs))/different layers may be transmitted. Alternatively, from respective TRPs of the multi-TRP, the same TB/CW/layer may be transmitted.

As one form of the multi-TRP transmission, non-coherent joint transmission (NCJT) is under study. In NCJT, for example, TRP 1 performs modulation mapping on a first codeword, performs layer mapping, and transmits a first PDSCH in a first number of layers (for example, two layers) by using first precoding. TRP 2 performs modulation mapping on a second codeword, performs layer mapping, and transmits a second PDSCH in a second number of layers (for example, two layers) by using second precoding.

Note that a plurality of PDSCHs (multi-PDSCH) transmitted by NCJT may be defined to partially or entirely overlap in terms of at least one of the time and frequency domains. In other words, the first PDSCH from the first TRP and the second PDSCH from the second TRP may overlap in terms of at least one of the time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

For URLLC for multi-TRP, it is studied that PDSCH (transport block (TB) or codeword (CW)) repetition over the multi-TRP is supported. It is studied that schemes for repetition over multi-TRP on a frequency domain, a layer (space) domain, or a time domain (URLLC schemes, for example, schemes 1, 2a, 2b, 3, and 4) are supported. In scheme 1, multi-PDSCH from the multi-TRP is space division multiplexed (SDMed). In schemes 2a and 2b, PDSCHs from the multi-TRP are frequency division multiplexed (FDMed). In scheme 2a, the same redundancy version (RV) is used for the multi-TRP. In scheme 2b, the same RV or different RVs may be used for the multi-TRP. In schemes 3 and 4, multi-PDSCH from the multi-TRP is time division multiplexed (TDMed). In scheme 3, multi-PDSCH from the multi-TRP is transmitted in one slot. In scheme 4, multi-PDSCH from the multi-TRP is transmitted in different slots.

Such a multi-TRP scenario enables more flexible transmission control using a high quality channel.

In NCJT using multi-TRP/multi-panel, a high rank may be used. In order to support ideal and non-ideal backhaul between a plurality of TRPs, both single DCI (single PDCCH, for example, FIG. 1B) and multi-DCI (multi-PDCCH, for example, FIG. 1D) may be supported. For both of the single DCI and the multi-DCI, the maximum number of TRPs may be two.

For single PDCCH design (for ideal backhaul, mainly), TCI enhancement is under study. Every TCI codepoint in DCI may correspond to one or two TCI states. A TCI field size may be the same as that of Rel. 15.

### (L1/L2 Inter-cell Mobility)

As described above, it is studied that a UE performs UL transmission to one or a plurality of cells/TRPs. As a procedure in such a case, Scenario 1 or Scenario 2 below is conceivable. Note that, in the present disclosure, a serving cell may be interpreted as a TRP in the serving cell. layer1/layer2 (L1/L2) and DCI/Medium Access Control Control Element (MAC CE) may be interchangeably interpreted. In the present disclosure, a physical cell ID (Physical Cell Identity (PCI)) different from a PCI of a current serving cell may be simply referred to as a "different PCI." A non-serving cell, a cell having a different PCI, and an additional cell may be interchangeably interpreted.

### <Scenario 1>

Although Scenario 1 corresponds, for example, to multi-TRP inter-cell mobility, a scenario not corresponding to multi-TRP inter-cell mobility may be possible.

(1) A UE receives, from a serving cell, a configuration of an SSB for beam measurement for a TRP corresponding to a PCI different from that of the serving cell and a configuration required to use a radio resource for data transmission/reception, including a resource for the different PCI.
(2) The UE performs the beam measurement for the TRP corresponding to the different PCI and reports the beam measurement result to the serving cell.
(3) Based on the reporting described above, a transmission configuration indication (TCI) state associated with the TRP corresponding to the different PCI is activated by L1/L2 signaling from the serving cell.
(4) The UE performs transmission/reception by using a UE-dedicated channel on the TRP corresponding to the different PCI.
(5) The UE is required to cover the serving cell all the time, including a case of multi-TRP. Similarly to an existing system, the UE is required to use a common channel (broadcast control channel (BCCH), paging channel (PCH)) or the like from the serving cell.

In Scenario 1, when the UE transmits/receives a signal to/from an additional cell/TRP (a TRP corresponding to a PCI of the additional cell), the serving cell (assumption of the serving cell in the UE) is not changed. The UE is configured, from the serving cell, with a higher layer parameter related to a PCI of a non-serving cell. Scenario 1 may be applied in Rel. 17, for example.

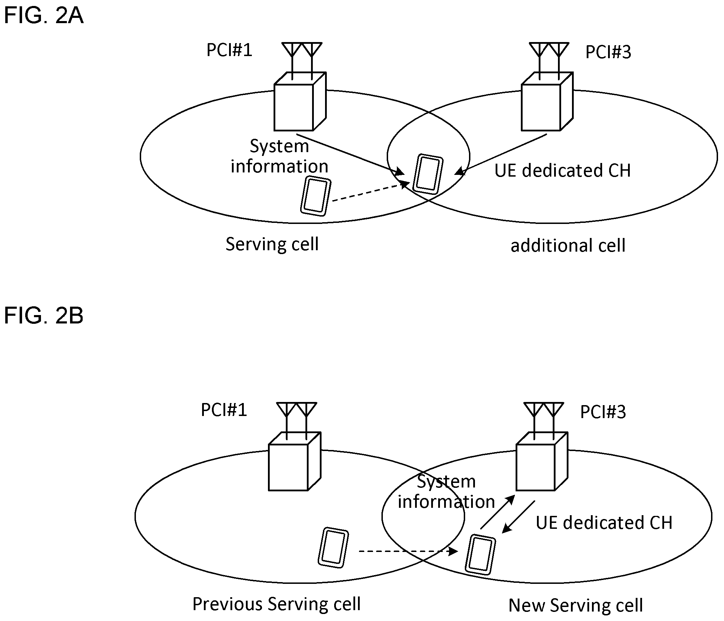

FIG. 2A is a diagram to show an example of movement of a UE in Rel. 17. The UE is assumed to move from a cell of PCI #1 (serving cell) to a cell of PCI #3 (additional cell) (overlapping with the serving cell). In this case, in Rel. 17, the serving cell is not switched by L1/L2. The additional cell is a cell having an additional PCI different from a PCI of the serving cell. The UE is possible to receive/transmit a UE-dedicated channel from/to the additional cell. The UE is required to be in the coverage of the serving cell in order to receive a UE-common channel (for example, system information/paging/short message).

### <Scenario 2>

In Scenario 2, L1/L2 inter-cell mobility is applied. In L1/L2 inter-cell mobility, serving cell change is possible to be made by using a function such as beam control, without RRC reconfiguration. In other words, transmission/reception to/from an additional cell is possible to be performed without handover. Handover requires RRC reconnection and the like that causes a data communication inhibition period, and thus L1/L2 inter-cell mobility not requiring such handover is applied, thereby allowing data communication to be continued even in serving cell change. Scenario 2 may be applied in Rel. 18, for example. In Scenario 2, for example, the following procedure is performed.

(1) A UE receives, from a serving cell, a configuration of an SSB of a cell (additional cell) having a different PCI in order for beam measurement/serving cell change.
(2) The UE performs the beam measurement for the cell using the different PCI and reports the measurement result to the serving cell.
(3) The UE may receive a configuration (serving cell configuration) for the cell having the different PCI by higher layer signaling (for example, RRC). In other words, pre-configuration related to the serving cell change may be performed. Such configuration may be performed together with configuration in (1) or may be performed separately.
(4) Based on the reporting, a TCI state for the cell having the different PCI may be activated by L1/L2 signaling in accordance with the serving cell change. The activation of the TCI state and the serving cell change may be performed separately.
(5) The UE changes the serving cell (assumption of the serving cell) and initiate reception/transmission by using a UE-dedicated channel and the TCI state that are pre-configured.

In other words, in Scenario 2, the serving cell (assumption of the serving cell in the UE) is updated by L1/L2 signaling. Scenario 2 may be applied in Rel. 18.

FIG. 2B is a diagram to show an example of movement of a UE in Rel. 18. In Rel. 18, the serving cell is switched by L1/L2. The UE is possible to receive/transmit a UE-dedicated channel/common channel from/to a new serving cell. The UE may be out of the coverage of the previous serving cell.

### (Configurations of Plurality of Candidate Cells)

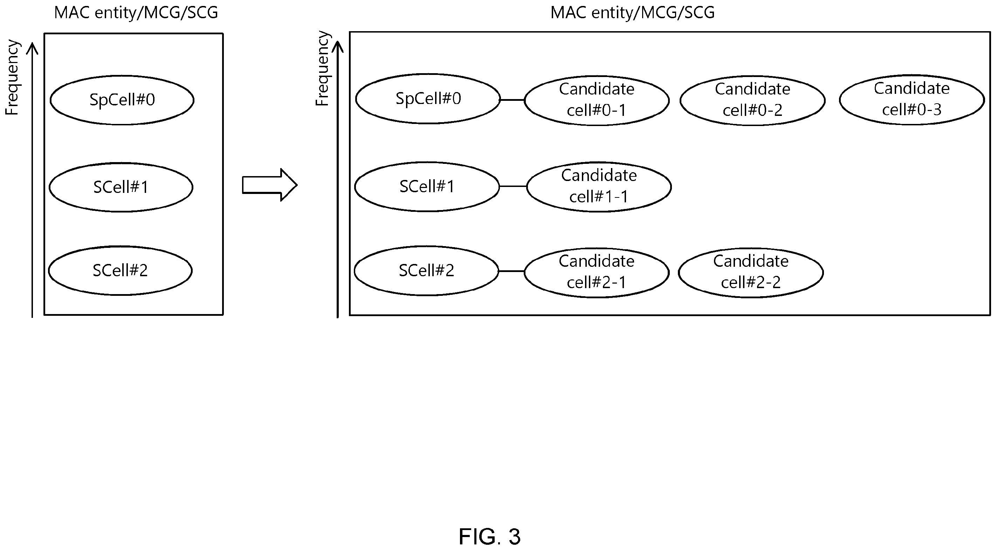

FIG. 3 is a diagram to show an example of association between serving cells and candidate cells. SpCell #0, SCell #1, or SCell #2 is assumed to be a serving cell. Note that an SpCell means a special cell (including a primary cell (PCell) and a primary secondary cell (PSCell)). An SCell means a secondary cell. SpCell #0 is associated with Candidate cell #0-1, Candidate cell #0-2, and Candidate cell #0-3. SCell #1 is associated with Candidate cell #1-1. SCell #2 is associated with Candidate cell #2-1 and Candidate cell #2-2. As described above, one or more candidate cells (candidate serving cells) may be associated with a serving cell.

Regarding a configuration of a cell to be a candidate (candidate cell) in a case of changing a serving cell, for example, Option 1 and Option 2 below are conceivable.

### <Option 1>

Information in ServingCellConfig may include information related to a plurality of candidate cells, as in inter-cell mobility in Rel. 17. In this case, the plurality of candidate cells are required to share the same configuration of PDCCH/PDSCH/UL or the like with the serving cell.

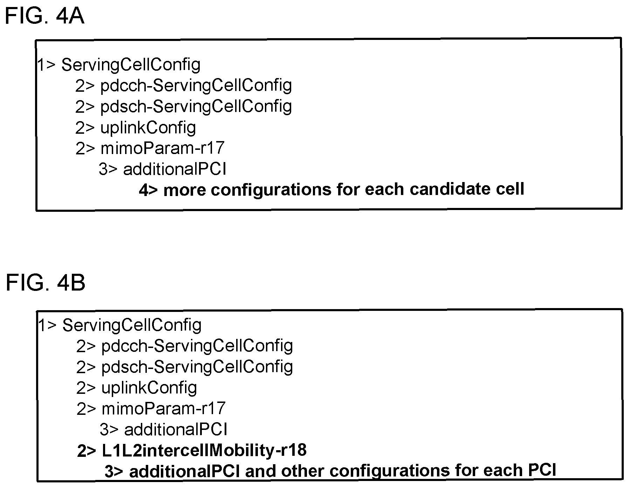

For example, for inter-cell mobility in Rel. 17, it is studied that "mimoParam-r17" is added under ServingCellConfig and PCI configuration information is added (FIGS. 4A and 4B). This framework is applied to a case where cells having different PCIs share the same configuration of PDCCH/PDSCH/UL or the like.

More configurations, such as an LTE CRS pattern and an RACH configuration, may be applied to each candidate cell. With a cell-specific CSI-RS configuration (for CSI/TRS) taken into account, a different CSI-RS occasion/resource is possible to be configured per cell, allowing interference to be reduced.

FIG. 4A is a diagram to show a first example of ServingCellConfig of Option 1. In FIG. 4A, ServingCellConfig includes configurations for an additional cell (each candidate cell). FIG. 4B is a diagram to show a second example of ServingCellConfig of Option 1. In FIG. 4B, ServingCellConfig includes configurations for an additional cell (each candidate cell) for L1/L2 inter-cell mobility. FIG. 4A corresponds to Scenario 1 described above, for example. FIG. 4B corresponds to Scenario 2 described above, for example.

As in FIGS. 4A and 4B, a candidate cell is pre-configured by RRC. As an initial state, a candidate cell may be fixed to be in a state activated/deactivated in a specification or may be configured, by RRC, to be in a state activated/deactivated. Furthermore, a candidate cell in L1/L2 cell switch may be activated/deactivated by a MAC CE. L1/L2 cell switch indication may be transmitted only for a cell from among active cells.

### <Option 2>

A plurality of candidate cells may be applied with a complete configuration (for example, ServingCellConfig) corresponding to the respective cells and may be, by re-using a carrier aggregation (CA) configuration framework, associated with serving cells. A UE is provided with the complete configuration for the respective candidate cells, allowing the UE to perform appropriate communication with the candidate cells.

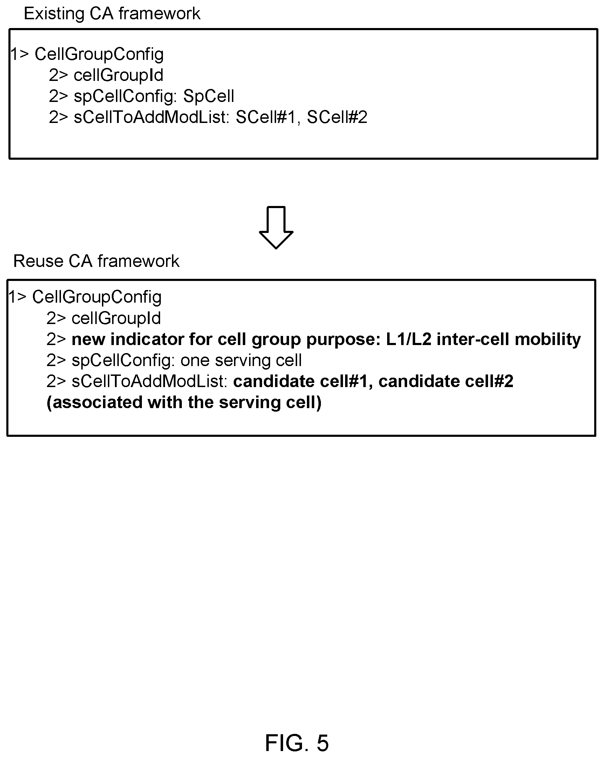

The CA configuration framework allows an SpCell to be configured per cell group and a plurality of SCells to be added. With a CA framework re-used, a serving cell may be configured per cell group in L1/L2 inter-cell mobility and a plurality of candidate cells may be configured (FIG. 5). A candidate cell may be activated/deactivated by a MAC CE. Such a method is considered profitable for complexity in UE operations to be reduced. As an example, CellGroupConfig with cell group ID 0 is shown.

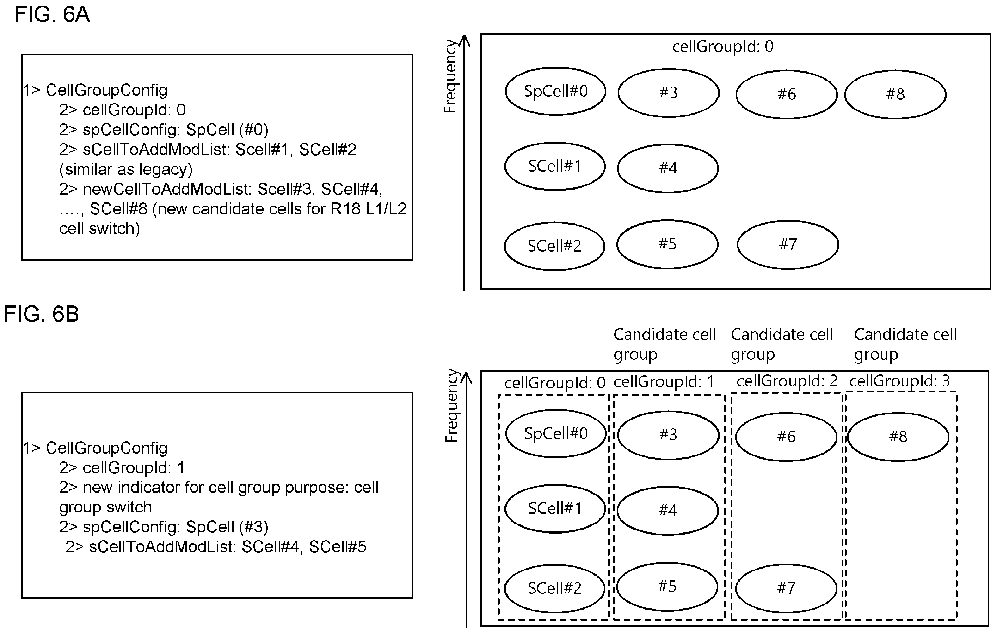

FIG. 6A is a diagram to show a second example of Option 2. In the example of FIG. 6A, for candidate cells, a common candidate cell pool for cell switch in an MCG/SCG is applied. In other words, the candidate cells are handled as one pool (group), regardless of a frequency band.

FIG. 6B is a diagram to show a third example of Option 2. In the example of FIG. 6B, a plurality of cell groups are configured and cell group switch is possible to be made by L1/L2 signaling. A candidate cell is configured per cell group and a configuration for each group includes indices of corresponding SpCell and SCell. As an example, CellGroupConfig with cell group ID 1 is shown.

### (Re-use of CA/DC Framework)

In a case of re-using a CA/DC framework, an NW (base station) may perform new indication for a UE explicitly/implicitly per cell group and configure a plurality of candidate cells to be associated with a serving cell.

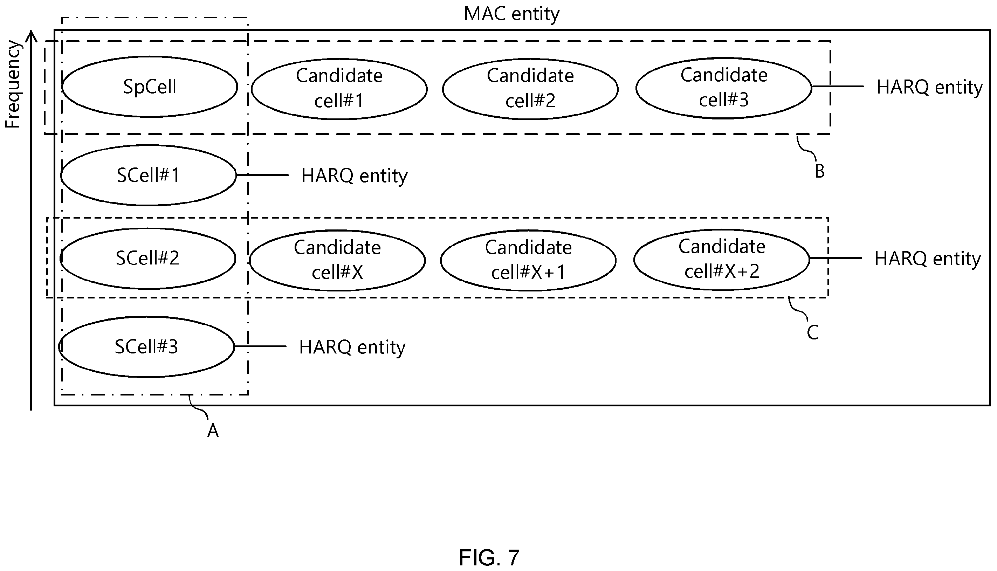

FIG. 7 is a diagram to show an example of a MAC entity/HARQ entity re-using a CA/DC framework. Cells in a frame indicated by A in FIG. 7 are cells in a cell group (MCG/SCG) for a CA/DC operation. The respective cells correspond to different frequencies. Cells in a frame indicated by B in FIG. 7 are cells in a cell group for an L1/L2 inter-cell mobility operation, and this is an example in a case that a serving cell is an SpCell. Every cell in B corresponds to the same frequency. Cells in a frame indicated by C in FIG. 7 are cells in a cell group for an L1/L2 inter-cell mobility operation, and this is an example in a case that a serving cell is an SCell. Every cell in C corresponds to the same frequency.

In other words, in CA/DC, cells correspond to respective different frequencies (CCs), whereas, in L1/L2 inter-cell mobility (multi-TRP), cells (cells having different PCIs) correspond to the same frequency (CC). Candidate cell #X in C may be different from (may be of a PCI/frequency different from) Candidate cell #1 in B. X may be an index re-created for a certain frequency and may be started from 1, for example. An index re-created may be an index that corresponds to at least a part of a PCI and that is re-created for a candidate cell.

In another example, respective cells (SpCells/Scells/Candidate cells) may correspond to different frequencies, even in a case of L1/L2 inter-cell mobility. Note that the respective cells may share the same HARQ entity corresponding to PDSCH scheduling.

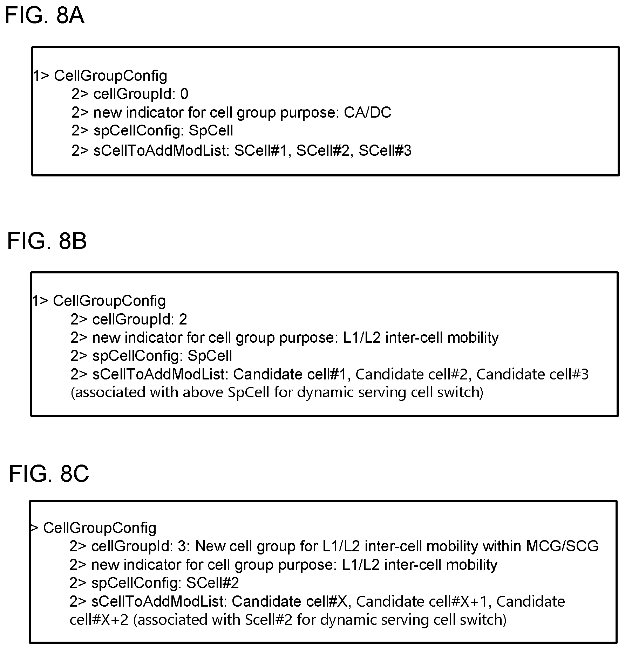

FIGS. 8A to 8C are diagrams to show examples of a cell group configuration corresponding to FIG. 7. FIGS. 8A, 8B, and 8C correspond to cells (cell groups) in the frames of A, B, and C of FIG. 7, respectively. "cellGroupId," "new indicator for cell group purpose," "spCellConfig," and "sCellToAddModList" are correspond to a cell (cell group) in each of the frames of A, B, and C of FIG. 7.

As described above, with a CA/DC framework re-used for an L1/L2 inter-cell mobility operation, cell group configuration related to L1/L2 inter-cell mobility is possible to be performed without adding any new RRC information element.

### (Signaling for Serving Cell Change Indication)

Implicit or explicit signaling for serving cell change indication will be described.

### {Aspect 1}

In Aspect 1, implicit signaling for serving cell change indication is described.

### {{Option 1-1}}

In a case where a specific control resource set (CORESET) (for example, at least one of CORESET #0, CH5 Type0-CSS CORESET, CH6/CH7/CH8 CSS CORESET) is indicated (activated) by a MAC CE together with one or more TCI states associated with a cell having a PCI different from a PCI of a serving cell (a case where the one or more TCI states associated with the cell having the PCI different from the PCI of the serving cell are indicated/activated, by the MAC CE, for the specific CORESET), a UE may judge the serving cell is to be changed to another cell (cell x, a cell having a different PCI). In other words, this activation may implicitly indicate change of the serving cell to another cell.

In this case, the UE may update another CORESET ID, another CORESET using CH6/CH7/CH8, or a beam of another CORESET using CSS to a TCI state the same as any one of the TCI states activated as above.

### {{Option 1-2}}

In a case where a MAC CE activate/deactivate TCI states for a PDSCH, when all of the TCI states activated by the MAC CE are associated with the same cell x having a PCI different from a PCI of a serving cell, a UE may judge the serving cell is to be changed to another cell (cell x). In other words, this association may implicitly indicate change of the serving cell to another cell.

In a case of applying this option, when an NW (base station) makes no serving cell change, a MAC CE, in activating TCI states for a PDSCH associated with a cell having a different PCI, is required to include a TCI state related to another cell (for example, a current serving cell or a cell having a second different PCI).

### {{Option 1-3}}

In a case where a MAC CE activate/deactivate unified TCI states (for example, corresponding to a unified TCI framework in Rel. 17) and all of the unified TCI states activated are associated with the same cell x having a different PCI, a UE may judge the serving cell is to be changed to another cell (cell x). In other words, this association may implicitly indicate change of the serving cell to another cell.

### {Aspect 2}

In Aspect 2, explicit signaling for serving cell change indication is described. In Aspect 2, Scenario 2 described above is applied, for example.

### {{Option 2-1}}

An example of serving cell change indication is described below. Note that activation/deactivation of a non-serving cell, serving cell change, and transmission/reception to/from another cell (non-serving cell) having a physical cell ID different from a physical cell ID of a serving cell may be interchangeably interpreted.

A UE may receive a new MAC CE that is to be used for activation/deactivation of a non-serving cell and that includes at least one of fields (pieces of information) indicating (1) to (3) below corresponding to the non-serving cell. The UE, when receiving the MAC CE, may judge that the serving cell is to be changed to another cell (non-serving cell). The UE may control, based on the information, transmission/reception of a DL signal/UL signal to/from the non-serving cell. Note that the non-serving cell may be one or may be two or more. In an example shown below, a MAC CE including a plurality of fields indicating a plurality of non-serving cell indices is applied.

(1) Serving cell ID
(2) BWP ID
(3) Non-serving cell ID used for activation The non-serving cell ID may be replaced with any information (possible to identify a non-serving cell) corresponding to the non-serving cell.

As an example of (3), any one of (3-1) to (3-5) may be applied, for example.
(3-1) PCI (PCI to be used directly) For example, 10 bits are used.
(3-2) Non-serving cell re-creation index (new ID) The new ID may be configured only for a serving cell or non-serving cell that is associated with a part of a PCI and that is used by (available for) a UE. The new ID allows the number of bits to be reduced as compared with that for a PCI.
(3-3) CSI report configuration ID (CSI-ReportConfigId) (in a case where CSI-ReportConfig corresponds to one or a plurality of non-serving cells)
(3-4) CSI resource configuration ID (CSI-ResourceConfigId) (in a case where CSI-ResourceConfigId corresponds to one or a plurality of non-serving cells)
(3-5) Bitmap indicating activation/deactivation of every non-serving cell The size (the number of bits) of the bitmap may be the same as the number of non-serving cells configured on this CC. For example, out of three non-serving cells, when the second non-serving cell is activated, "010" is configured.

At least one of pieces of information included in a MAC CE may be included in DCI. Alternatively, at least one of serving cells activated by the MAC CE may be indicated by the DCI. The MAC CE/DCI may include a field indicating a TCI state/SSB/CSI-RS from a cell having a different PCI, in order for a UE to recognize a DL beam to monitor in a target cell (a serving cell after change). The UE may create, using the TCI state/SSB/CSI-RS, a beam report (CSI report) and transmit the report.

### {{Option 2-2}}

A UE may receive a MAC CE obtained by adding a new field "C" of one bit to an existing MAC CE. Such a field indicate whether to perform serving cell change. The UE may receive the MAC CE and judge, based on the field, whether to change the serving cell to another cell.

### {{Option 2-3}}

With respect to the MAC CE in Option 2-2, a field indicating a serving cell index/PCI/another ID (such as the new ID in Option 2-1 described above) and a field of a TCI state/SSB/CSI-RS for a target cell (serving cell after change) may be further included in the MAC CE.

As described above, indication for serving cell change indication is made by a MAC CE/DCI, allowing a UE to appropriately perform serving cell change.

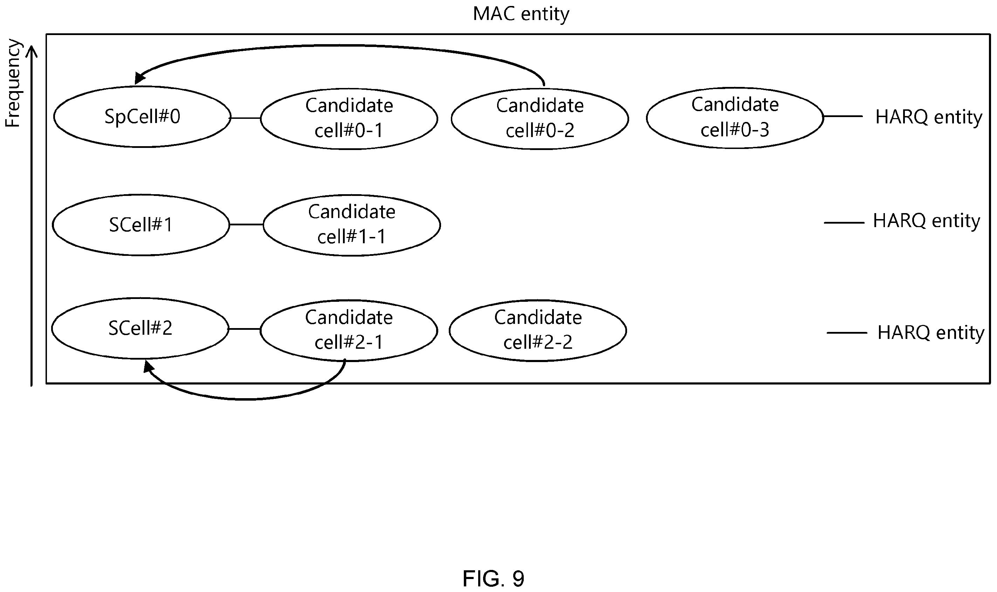

FIG. 9 is a diagram to show an example of serving cell change. For example, in a serving cell SpCell #0 in an MCG/SCG, in a case where change of the serving cell to Candidate cell #0-2 is indicated by L1/L2 signaling, Candidate cell #0-2 becomes a new serving cell SpCell #0. For example, in a serving cell SCell #2 in an MCG/SCG, in a case where change of the serving cell to Candidate cell #2-1 is indicated by L1/L2 signaling, Candidate cell #2-1 becomes a new serving cell SCell #2.

### <L1 Beam Measurement/Report>

In a case of applying L1/L2 inter-cell mobility, L1-RSRP beam measurement/report from an additional PCI cell in Rel. 17 may be applied. L1 beam measurement/report by an event trigger may be performed. L1 beam measurement/report and L3 measurement/report may correspond to each other.

### <L1 Beam Indication and L1/L2 Cell Switch Indication>

In Rel. 17, L1 beam indication to a TCI state related to an additional PCI is supported. As described above, a new L1/L2 signal for indication of cell switch is required. For example, methods of both implicit indication (for example, a case that a certain CORESET is updated to a TCI state related to an additional PCI by a MAC CE) and explicit indication (for example, indication using DCI/MAC CE) are conceivable.

### {Serving Cell Switch Example 1}

RRC/MAC CE is possible to configure a global candidate cell ID (cell #0, ..., 5) per cell group/band/FR/UE. Serving cell switch may be indicated, to a UE, with the global candidate cell ID.

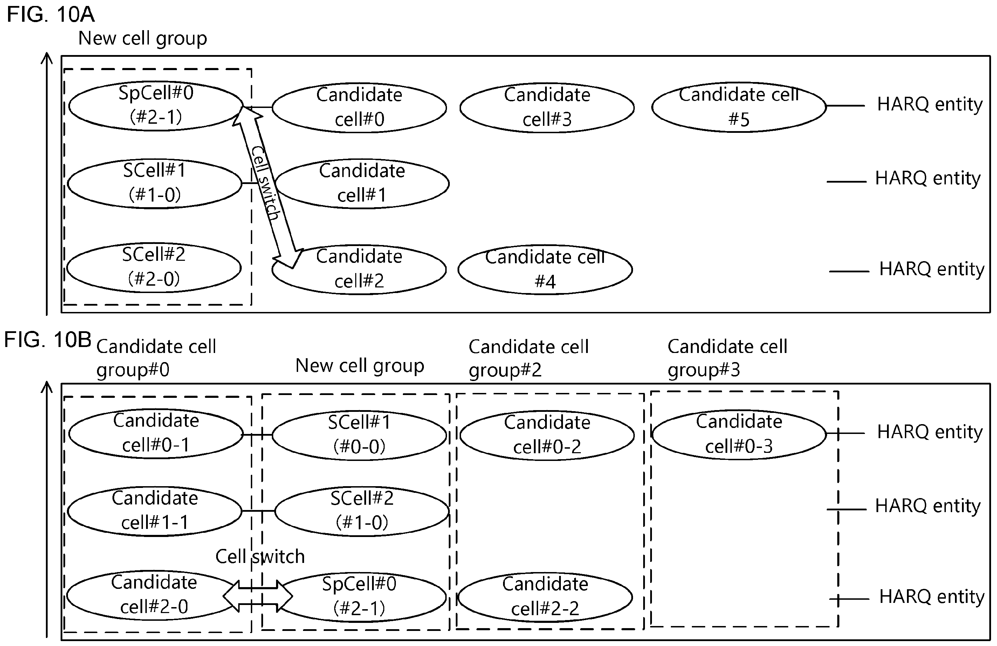

FIG. 10A is a diagram to show Serving Cell Switch Example 1. Similarly to FIG. 6A, a pool of a plurality of candidate cells may be configured and the serving cell may be switched to any (activated) candidate cell in the pool by L1/L2 signaling. In this case, a candidate cell configured may be either an SpCell or S-Se-ll on the basis of L1/L2 signaling. This is a cell pool, the candidates for cell switch for every serving cell.

A UE receives, by a MAC CE/DCI, indication of serving cell change (from cell #2 to cell #2-1). Then, cell #2-1 indicated becomes an SpCell in a new cell group. Regarding cells other than the SpCell, Cell #1-0 becomes SCell #1 and Cell #2-0 becomes SCell #2.

### {Serving Cell Switch Example 2}

RRC/MAC CE is possible to configure a global candidate cell ID (cell #0-1, #0-1, ..., 2-2) per cell group/band/FR/UE. Serving cell switch may be indicated, to a UE, with the global candidate cell ID.

FIG. 10B is a diagram to show Serving Cell Switch Example 2. A UE receives, by a MAC CE/DCI, indication of serving cell change (from cell #2-0 to cell #2-1). Then, cell #2-1 indicated becomes an SpCell in a new cell group. Regarding cells other than the SpCell, Option 1 or Option 2 below is applied.

### <<Option 1>>

By the order of the global candidate cell IDs, cell #0-0 becomes Scell #1 and cell #1-0 becomes Scell #2 (the example in FIG. 10B).

### <<Option 2>>

Cell #1-0 is Scell #1 (no change) and cell #0-0 (previous SpCell) becomes Scell #2. In other words, control is made such that there is fewer change.

### (Tag Management)

Every candidate cell may be associated with a tag (TAG). Different serving cells and different candidate cells may be associated with the same TAG. In order to acquire a TAG of a candidate cell, an RACH for the candidate cell may be supported. A tag may be configured/indicated for a UE by higher layer signaling/physical layer signaling.

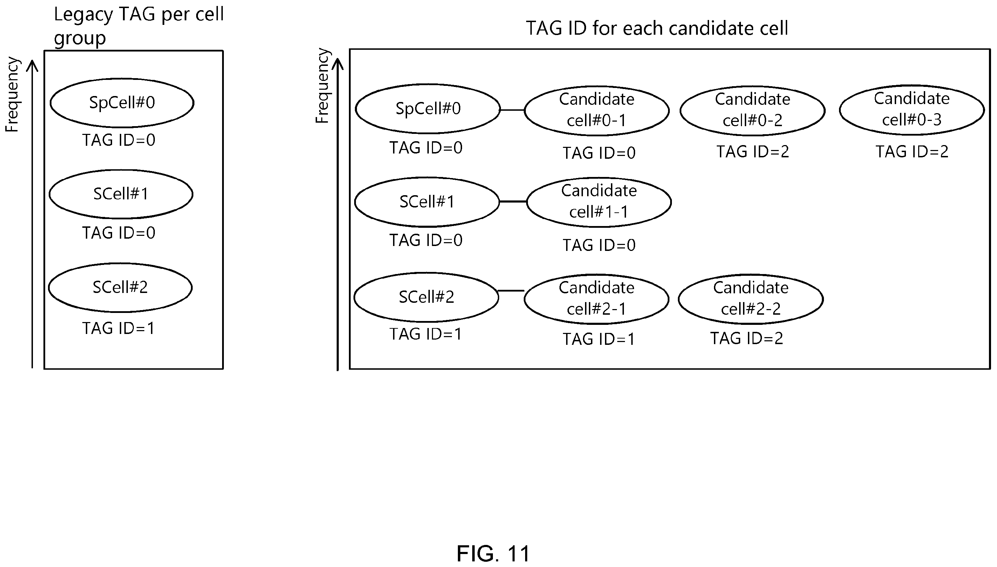

FIG. 11 is a diagram to show an example of association between tags and candidate cells. In the example of FIG. 11, SpCell #0 has the same tag as Scell #1. Candidate cell #0-1 had the same tag as Candidate cell #1-1. Note that all the serving cells may have different tags. All the candidate cells may have different tags.

### (Configuration Example of ServingCellConfig)

For Rel. 18, it is studied, for a UE, that a part or all of serving cell configurations for a non-serving cell (additional cell, additional PCI, candidate cell) is configured for the UE in advance, in order to enable serving cell switch by L1/L2. With ServingCellConfig shown in the example of FIG. 4 of Option 1 (of configurations of a plurality of candidate cells) described above being applied to an additional cell, all parameters or a part of the parameters related to the additional cell may be configured.

Alternatively, as described in Option 2 (of configurations of a plurality of candidate cells) described above, all parameters in ServingCellConfig may be configured for an additional cell. With this, different ones of ServingCellConfig are possible to be configured for respective different cells, allowing flexible configuration to be made. However, ServingCellConfig has a very large RRC structure, and thus overhead of RRC may be caused to be large.

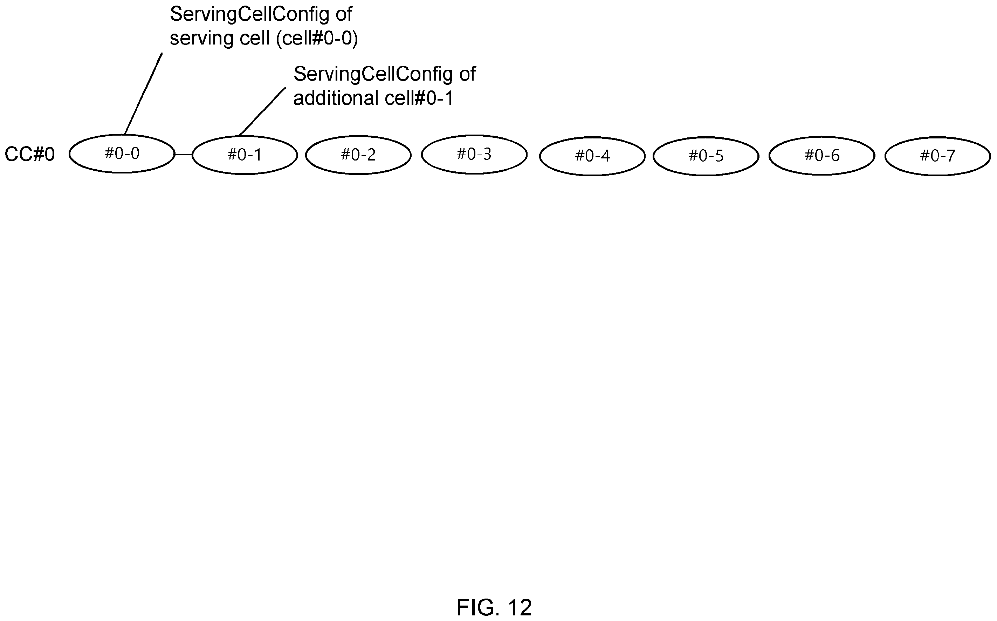

FIG. 12 is a diagram to show a configuration example of ServingCellConfig of a cell (CC). It is assumed that a serving cell is #0-0 and candidate cells are #0-1 to #0-7. Although #0-0 is a PScell, this similarly applies to a case of an SCell. In this example, the cells (the serving cell and additional cells) are configured with respective separate ones of ServingCellConfig. In this case, overhead of RRC may be large.

### (Analysis)

As described above, in a case of applying multi-TRP, with signaling of at least one of layer 1 and layer 2, a serving cell may be switched to a cell (additional cell) having a PCI different from that of the serving cell (L1/L2 inter-cell mobility (layer1/layer2 inter-cell mobility)). In a case of performing cell switch, however, unless configuration related to a cell (serving cell/additional cell) is appropriately performed, a problem such as reduction in communication throughput may be caused. For example, in the example of FIG. 12, overhead of RRC may be large.

In view of this, the inventors of the present invention came up with the idea of a terminal, a radio communication method, and a base station that allow cell switch to be appropriately performed.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notification, activate, deactivate, indication (or indicate), selection (select), configuration (configure), update, determination (determine), and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

Applying a TCI state indicated, switching a TCI state, and switching a cell (serving cell) may be interchangeably interpreted. In the present disclosure, switching of a cell (cell switch) may mean switching of a serving cell.

In the present disclosure, a cell group, a serving cell group, a master cell group (MCG), and a secondary cell group (SCG) may be interchangeably interpreted. L1/L2, L1/L2 signaling, and DCI/MAC CE may be interchangeably interpreted. A serving cell may be replaced with a cell that a PDSCH is transmitted. A candidate cell may mean a cell of candidate to become a serving cell by L1/L2 inter-cell mobility.

In the present disclosure, a cell, a PCI, a serving cell, a source serving cell, a CC, a BWP, a BWP in a CC, and a band may be interchangeably interpreted. In the present disclosure, an additional cell, another cell, a non-serving cell, a cell having a different PCI, a candidate cell, a candidate serving cell, a cell having a PCI different from a PCI of a current serving cell, another serving cell, and a target cell may be replaced with one another. In the present disclosure, switch, change, and update may be interchangeably interpreted. A serving cell may be interpreted as a serving cell before switch or a serving cell after switch.

### (Radio Communication Method)

### <First Embodiment>

A UE may receive, by a method of Option 1 or Option 2 (of configurations of a plurality of candidate cells) described above, one or more serving cell configurations (ServingCellConfig) (configurations/parameters of a part or all of serving cell configurations) for a serving cell and an additional cell (candidate cell). The UE may control, based on the one or more serving cell configurations, transmission/reception to/from at least one of the serving cell and the additional cell. Each of the one or more serving cell configurations may be a configuration related to a plurality of additional cells (for example, ServingCellConfig #1 or #2 described below) or a configuration related to one serving cell and one or more additional cells (for example, ServingCellConfig #0 described below). The number of pieces of ServingCellConfig of additional cells to be configured may be different from the number of the additional cells (PCIs of the additional cells) (for example, the number may be smaller than the number of the additional cells).

The pieces of ServingCellConfig configured may be configured with new cell indices (such as ServingCellConfig #0, 1, or 2), and each of the new cell indices may be associated with a PCI (a PCI of a serving cell or a PCI of an additional cell).

In a case where serving cell switch is indicated by an L1/L2 (DCI or MAC CE), the UE may use ServingCellConfig associated with a new candidate cell (a cell of a PCI indicated). In other words, the UE may update a current serving configuration on the basis of ServingCellConfig associated with the new candidate cell.

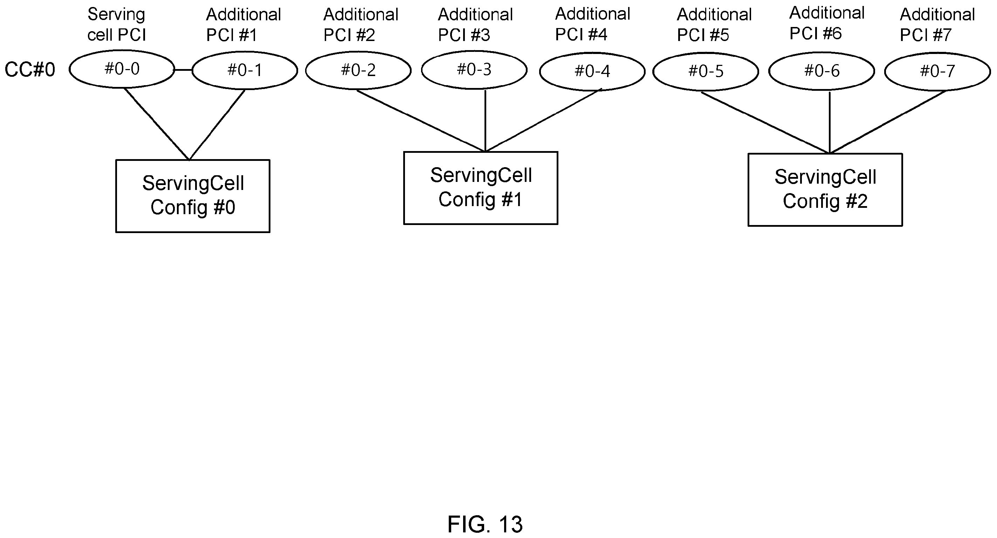

FIG. 13 is a diagram to show a configuration example of ServingCellConfig according to a first embodiment. With respect to an expression "#x-y," x indicates an index of a component carrier (CC) and y indicates a new index corresponding to an additional PCI. As shown in FIG. 13, ServingCellConfig #0 indicates a configuration for serving cell #0-0 and additional cell #0-1. ServingCellConfig #1 indicates a configuration for additional cell #0-2 to additional cell #0-4. ServingCellConfig #2 indicates a configuration for additional cell #0-5 to additional cell #0-7. In other words, one piece of ServingCellConfig indicates a configuration for one or a plurality of serving cell cells/additional cells.

Note that, between cells (serving cells/additional cells) configured with the same ServingCellConfig, all the configurations need not be the same and a part of (most of) the configurations may be the same. For example, ServingCellConfig as shown in FIG. 4 may be applied. In other words, configuration information (parameter) for the same configuration is made common to a plurality of cells and only a configuration different between the cells is configured explicitly in one piece of ServingCellConfig, allowing overhead of signaling to be suppressed.

As described above, at least a part of ServingCellConfig is made common to a plurality of cells, allowing overhead of signaling to be suppressed.

### {Embodiment 1-1}

The same serving cell configuration (the same set/combination of ServingCellConfig numbers) may be shared between different CCs (frequency bands) and different PCI cells. This embodiment may be combined with Option 2 (of configurations of a plurality of candidate cells) described above, for example.

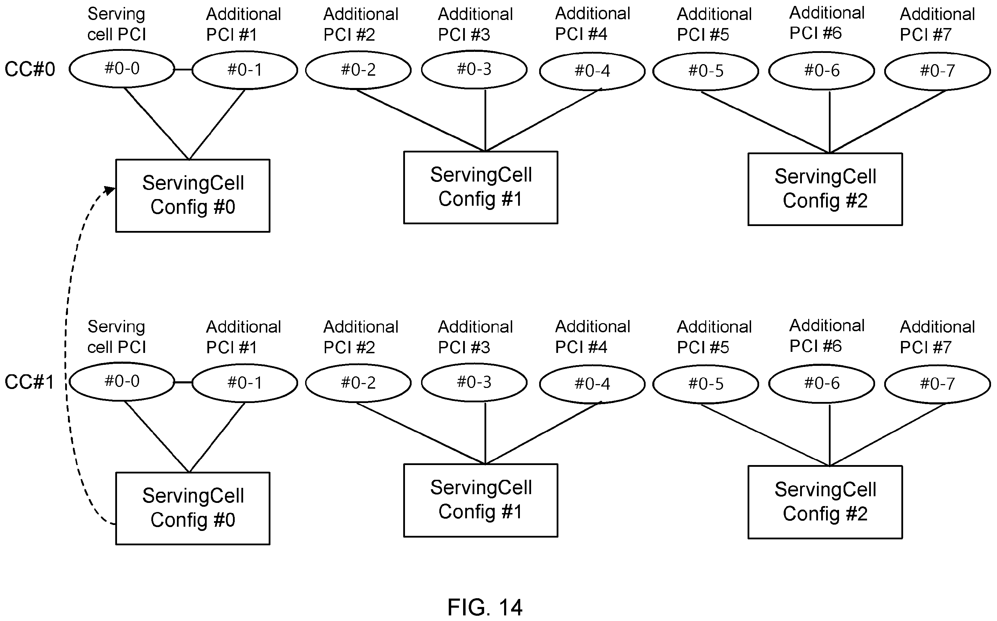

FIG. 14 is a diagram to show a configuration example of ServingCellConfig according to Embodiment 1-1. In FIG. 14, between different (plurality of) CCs, up to two pieces of ServingCellConfig may be used for an additional PCI (candidate cell). In the example of FIG. 14, ServingCellConfig #0 to ServingCellConfig #2 are shared by CC #0 and CC #1. Note that ServingCellConfig with a different number may be configured per CC and configuration content of each ServingCellConfig may be the same.

In FIG. 14, between a plurality of CCs (CC #0 and CC #1), a configuration of association between cell numbers and ServingCellConfig numbers (a set of cells corresponding to one piece of ServingCellConfig) may be the same. In this case, a UE may assume that the configuration of the association is the same between different CCs. This allows implementation of the UE to be simplified. Alternatively, the UE may assume that the configuration of the association is the same or different between a plurality of CCs. This allows flexibility in a base station (gNB) to be enhanced.

According to Embodiment 1-1, ServingCellConfig is shared between different (plurality of) CCs, allowing overhead of RRC signaling to be suppressed.

### {Embodiment 1-2}

Separate serving cell configurations (separate sets/combinations of ServingCellConfig numbers) may be configured for different CCs. This embodiment may be combined with Option 1 or Option 2 (of configurations of a plurality of candidate cells) described above, for example.

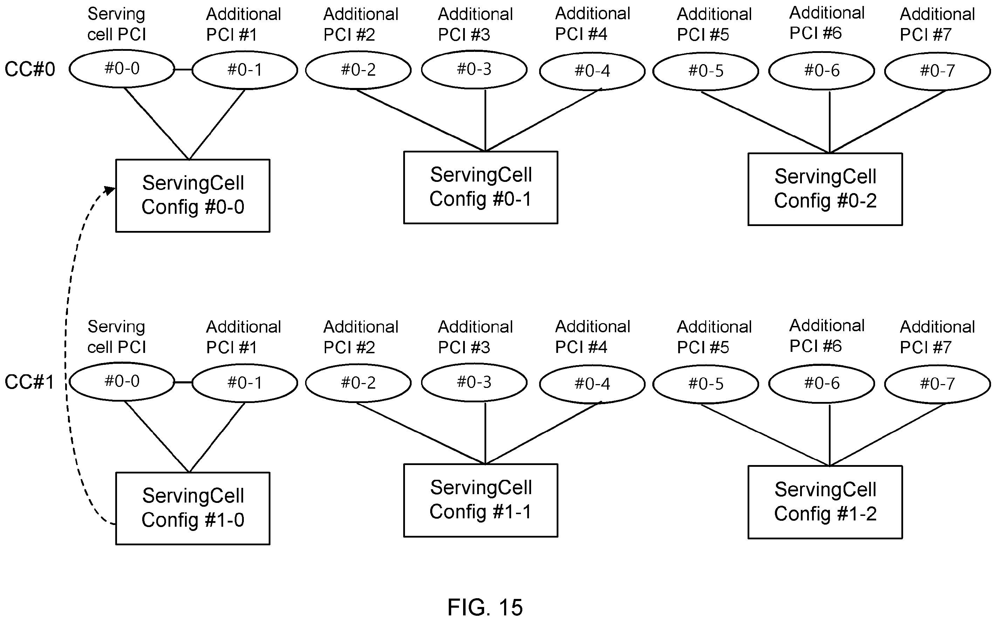

FIG. 15 is a diagram to show a configuration example of ServingCellConfig according to Embodiment 1-2. In FIG. 15, between different (plurality of) CCs, up to two pieces of ServingCellConfig may be used for an additional PCI (candidate cell). In the example of FIG. 15, for CC #0, ServingCellConfig #0-0, ServingCellConfig #0-1, and ServingCellConfig #0-2 are used. For CC #0, ServingCellConfig #1-0, ServingCellConfig #1-1, and ServingCellConfig #1-2 are used.

In FIG. 15, between a plurality of CCs (CC #0 and CC #1), a configuration of association between cell numbers and ServingCellConfig numbers may be the same (a set of cells corresponding to one piece of ServingCellConfig may be the same). In this case, a UE may assume that the configuration of the association is the same between different CCs. This allows implementation of the UE to be simplified. Alternatively, the UE may assume that the configuration of the association is the same or different between a plurality of CCs. This allows flexibility in a base station (gNB) to be enhanced.

Embodiment 1-2 allows configuration of ServingCellConfig to be made flexibly per CC. Note that, for example, Embodiment 1-2 may be applied between a PCell and an SCell and Embodiment 1-1 may be applied between SCells. This is because ServingCellConfig is highly likely to be different between a PCell and an SCell whereas ServingCellConfig is highly likely to be the same (or almost the same) between different (plurality of) SCells. This allows overhead of RRC signaling to be suppressed and appropriate configuration to be made for an additional cell.

### {Example 1}

An example obtained by combining the first embodiment and Option 1 (of configurations of a plurality of candidate cells) described above will be described. In other words, ServingCellConfig of a serving cell may include configurations of a plurality of candidate cells.

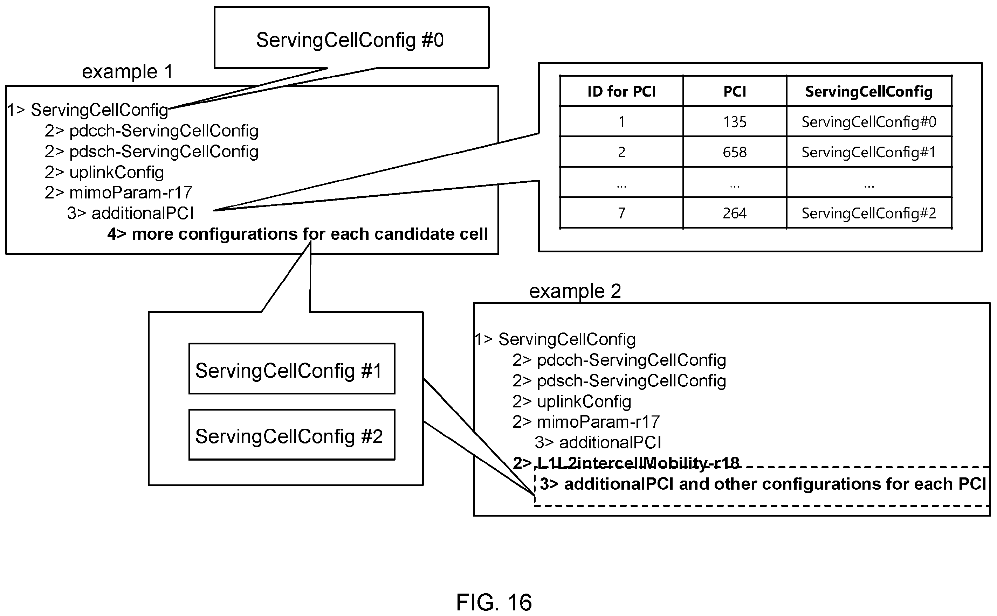

FIG. 16 is a diagram to show a serving cell configuration of Example 1**.** ServingCellConfig in FIG. 16 corresponds to ServingCellConfig #0 in FIG. 14. ServingCellConfig #1 corresponds to a plurality of additional cells (candidate cells) #2 to #4, as shown in FIG. 14. ServingCellConfig #2 corresponds to a plurality of additional cells (candidate cells) #5 to #7. ServingCellConfig #1 and ServingCellConfig #2 may include a configuration (parameter) of a part or all of ServingCellConfig.

ServingCellConfig in a first example (example 1) may include, as more configurations for each candidate cell, configurations corresponding to ServingCellConfig #1 and ServingCellConfig #2 (the example in FIG. 4A is applied). ServingCellConfig in a second example (example 2) may include, as additionalPCI and other configurations for each PCI, configurations corresponding to ServingCellConfig #1 and ServingCellConfig #2 (the example in FIG. 4B is applied).

additional PCI, which is an ID of an additional cell (candidate cell), may be a non-serving cell re-creation index (additional PCI/new ID) described above. Up to seven additional PCIs may be configured by RRC signaling (additionalPCI, ID for PCI in FIG. 16). ID = 0 may mean a serving cell PCI. ServingCellConfig #ID may be configured per additional PCI. For a serving cell, existing ServingCellConfig may be used and the ID of such ServingCellConfig may be #0.

### {Example 2}

An example obtained by combining the first embodiment and Option 2 (of configurations of a plurality of candidate cells) described above will be described. In other words, a plurality of candidate cells may be applied with a complete configuration (for example, ServingCellConfig) corresponding to the respective cells and may be, by re-using a carrier aggregation (CA) configuration framework, associated with serving cells.

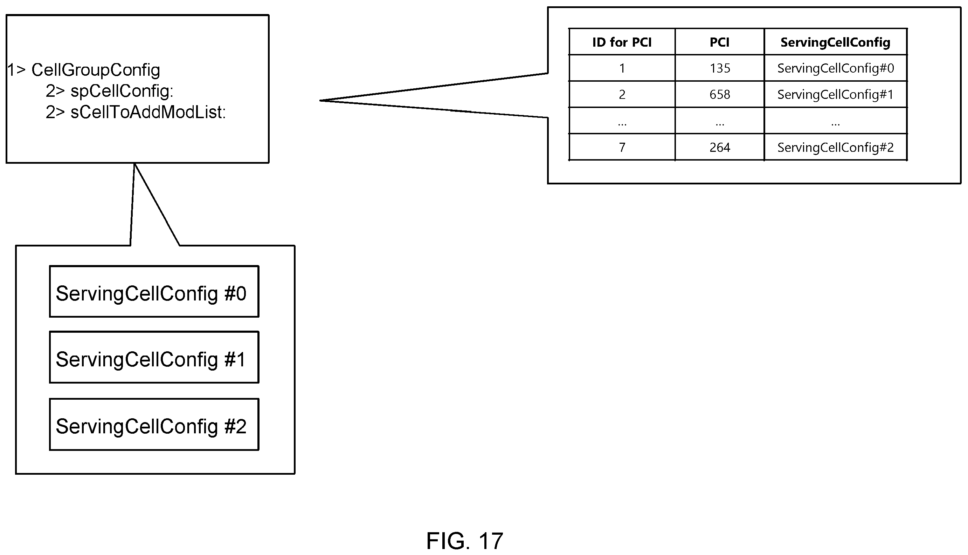

FIG. 17 is a diagram to show a cell group configuration (CellGroupConfig) of Example 2. In a case of applying Embodiment 1-1, ServingCellConfig #0, ServingCellConfig #1, and ServingCellConfig #2 are configured separately. The cell group configuration includes IDs of ServingCellConfig #0, ServingCellConfig #1, and ServingCellConfig #2. In a case of applying Embodiment 1-2, the cell group configuration includes IDs of ServingCellConfig #0, ServingCellConfig #1, and ServingCellConfig #2 per cell. Similarly to Example 1, a non-serving cell re-creation index (additional PCI/new ID) described above may be used as an ID of additional PCI (additional cell/candidate cell).

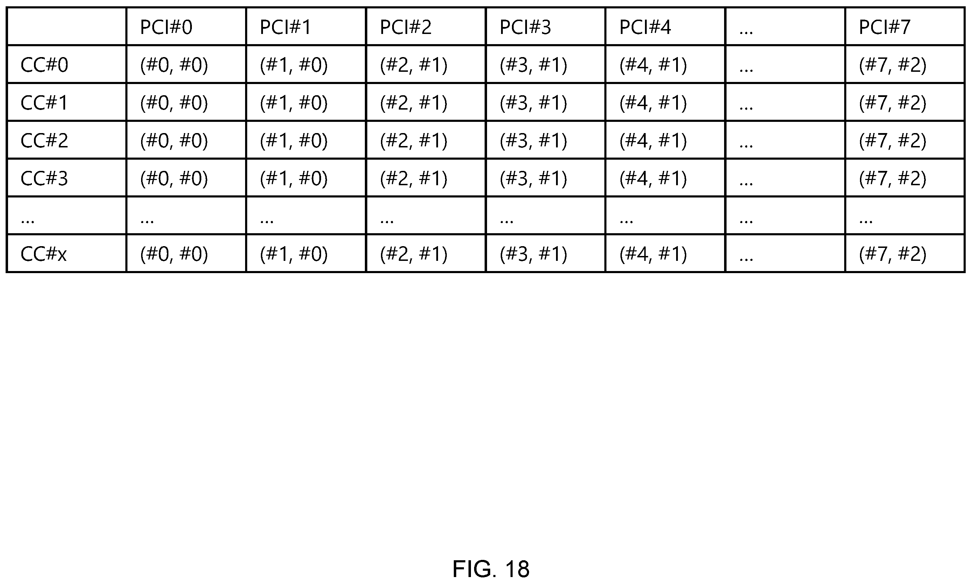

FIG. 18 is a table to show PCI numbers and serving cell configuration numbers of Example 2. As shown in FIG. 18, the same PCI numbers and serving cell configurations are applied to each CC. ServingCellConfig #0 corresponds to PCIs #0 and #1. ServingCellConfig #1 corresponds to PCIs #2 to #4. ServingCellConfig #2 corresponds to PCIs #5 to #7.

Although the examples in FIGS. 16 to 18 are each an example with Embodiment 1-1 applied, Embodiment 1-2 may be combined with Option 1 or Option 2 (of configurations of a plurality of candidate cells) described above. In this case, ServingCellConfig #0 is replaced with ServingCellConfig #0-0 or ServingCellConfig #1-0. ServingCellConfig #1 and ServingCellConfig #2 are respectively replaced with ServingCellConfig #0-1 and ServingCellConfig #0-2 or with ServingCellConfig #1-1 and ServingCellConfig #1-2.

### {Variations}

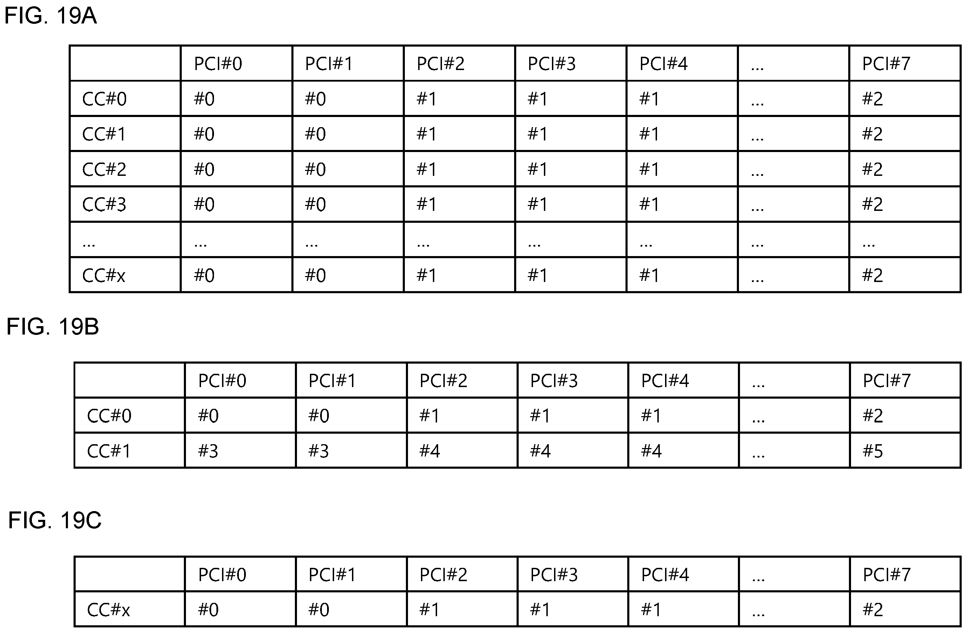

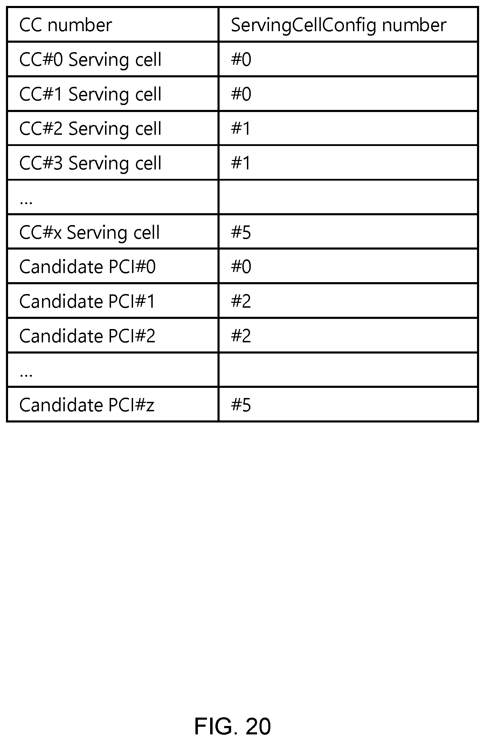

A variation in a case of applying Option 2 (of configurations of a plurality of candidate cells) described above will be described. FIGS. 19A to 19C, and 20 are variations of a table, configured per band/cell group, showing PCI numbers and serving cell configurations.

FIG. 19A is a diagram to show a first example of a table showing a relation between PCI numbers and serving cell configurations. In FIG. 19A, PCI numbers are omitted and only serving cell configurations are shown, as compared with FIG. 18.

FIG. 19B is a diagram to show a second example of a table showing a relation between PCI numbers and serving cell configurations. In FIG. 19B, PCI numbers are omitted and only serving cell configurations are shown. In FIG. 19B, CC #0 and CC #1 are provided with different serving cell configuration numbers.

FIG. 19C is a diagram to show a third example of a table showing a relation between PCI numbers and serving cell configurations. In FIG. 19C, PCI numbers are omitted and only serving cell configurations are shown. In FIG. 19C, the serving cell configuration numbers provided are common to CCs, and thus the table includes only one row per band/cell group. This example may be applied to Embodiment 1-1.

FIG. 20 is a diagram to show a fourth example of a table showing a relation between PCI numbers and serving cell configurations. In FIG. 20, a case is assumed that a candidate cell pool is applied as in FIGS. 6A and 10A. In the example of FIG. 20, for example, a candidate cell PCI #0, a CC #0 serving cell, and a CC #1 serving cell share a ServingCellConfig number. In other words, regardless of a frequency band, a serving cell and a candidate cell are possible to share a serving cell configuration.

### <Second Embodiment>

A UE may receive one or more serving cell configurations (ServingCellConfig) for a serving cell and an additional cell and control, based on the one or more serving cell configurations, transmission/reception to/from at least one of the serving cell and the additional cell.

### {Embodiment 2-1}

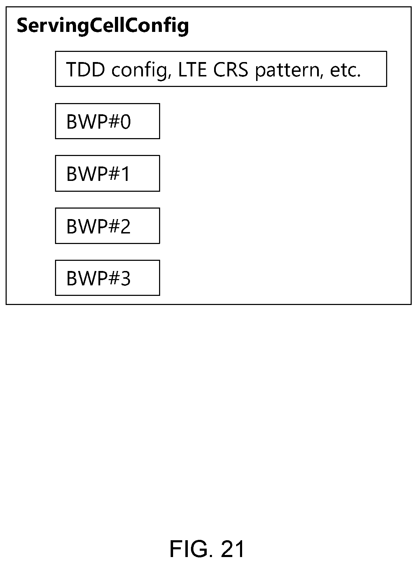

Each of the one or more serving cell configurations (ServingCellConfig) may include a plurality of bandwidth part (BWP) related configurations (FIG. 21). Each of the BWP related configurations may correspond to at least one of the serving cell and the additional cell. Some of RRC parameters of ServingCellConfig are related to a BWP of ServingCellConfig. Hereinafter, a BWP related configuration may be referred to as a BWP configuration.

For additional cells (additional PCIs), all of the parameters in ServingCellConfig need not be configured. In a case where a base station (gNB) configures, in ServingCellConfig, different BWPs for the respective cells/PCIs, a BWP may be switched by an existing BWP switch mechanism after L1/L2 serving cell switch.

For the additional cells/PCIs, only a limited parameter may be configured and, as another parameter, a parameter in ServingCellConfig of the serving cell may be used. For example, in a case where there are a PCI of a serving cell and additional PCIs #1 to #7, BWP #0 in ServingCellConfig is used for the PCI of the serving cell and a cell of additional PCI #1, BWP #1 in ServingCellConfig is used for additional PCIs #2 to #4, and BWP #3 in ServingCellConfig is used for additional PCIs #5 to #7.

### {Embodiment 2-2}

Which BWP related configuration in ServingCellConfig is to be used, for an additional cell/PCI, may be configured by higher layer signaling or may be determined in a specification.

A BWP ID may be configured/indicated per additional cell/PCI. In a case where no BWP ID is configured/indicated for an additional cell/PCI, an ID the same as a BWP ID of a serving cell is used for the additional cell/PCI.

"ServingCellConfig" in the present disclosure may be replaced with "BWP configuration (BWPConfig) in ServingCellConfig." According to Embodiment 2-1, a base station (gNB) need not trigger BWP switch after L1/L2 serving cell switch.

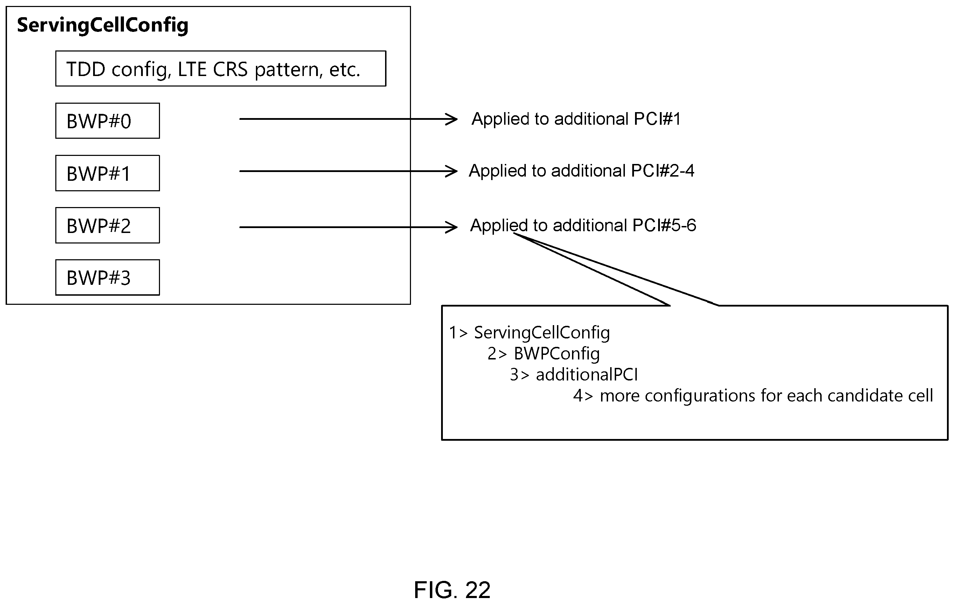

FIG. 22 is a diagram to show an overview of Embodiment 2-2. BWP #0 in ServingCellConfig is used for a cell of additional PCI #1, BWP #1 in ServingCellConfig is used for additional PCIs #2 to #4, and BWP #3 in ServingCellConfig is used for additional PCIs #5 to #6. ServingCellConfig may include BWPConfig. With this, for an additional PCI (for example, additional PCIs #5 to #6) that a certain BWP is used for, a parameter (more configurations for each candidate cell in FIG. 22) different from that of an additional PCI that another BWP is used for is possible to be configured in BWPConfig. A different parameter is possible to be configured per additional PCI.

In the example shown in FIG. 22, a different configuration per ServingCellConfig, a different configuration per BWP (BWPConfig), and a different configuration per additional PCI are each transmitted to a UE by RRC signaling. With this, parameters possible to be made common are possible to be made common, allowing overhead of RRC signaling to be suppressed.

Note that the larger the number of BWP configurations (BWPConfig) the more complex base station (gNB) operations, and thus the number of BWP configurations for one serving cell configuration (ServingCellConfig) may be limited to a certain number. For example, Option 1 or Option 2 below may be applied.

### <<Option 1>>

One serving cell configuration (ServingCellConfig) may include three BWP configurations (BWPConfig). For example, for one piece of ServingCellConfig, BWP #1 for an MCG in FR1, BWP #2 for an SCG in FR1, and BWP #3 for an SCG in FR2 may be configured. A reason why FR1 and FR2 are distinguished is that a narrow BWP may be configured in FR2 for battery save. Otherwise, two pieces of BWPConfig, for an MCG and SCG, as in Option 2 may be applied.

### <<Option 2>>

For one serving cell configuration (ServingCellConfig), two BWP configurations (BWPConfig) may be configured. For example, for one piece of ServingCellConfig, BWP #1 for an MCG and BWP #2 for an SCG may be configured.

Option 1 and Option 2 may be similarly applied to ServingCellConfig. In other words, as a variation of Option 1, only three pieces of ServingCellConfig may be configured. For example, ServingCellConfig #1 for an MCG in FR1, ServingCellConfig #2 for an SCG in FR1, and ServingCellConfig #3 for an SCG in FR2 may be configured. As a variation of Option 2, only two pieces of ServingCellConfig may be configured. For example, ServingCellConfig #1 for an MCG and ServingCellConfig #2 for an SCG may be configured.

### <Third Embodiment>

In a case where a specific RRC parameter is not configured for ServingCellConfig for an additional cell (or BWPConfig in ServingCellConfig), regarding the specific RRC parameter, a UE may use (may assume to use), for the additional cell/PCI, an RRC parameter the same as that for a serving cell (ServingCellConfig #0). In the present disclosure, ServingCellConfig #0 may mean a serving cell configuration used for a serving cell before switch.

For example, in a case where no PDCCH-Config is present in ServingCellConfig #1/#2, a UE may assume that PDCCH-Config in ServingCellConfig #0 is applied to ServingCellConfig #1/#2. This allows overhead of RRC to be reduced. The third embodiment may be combined with Option 1 or Option 2 (of configurations of a plurality of candidate cells) and the first/second embodiment for application.

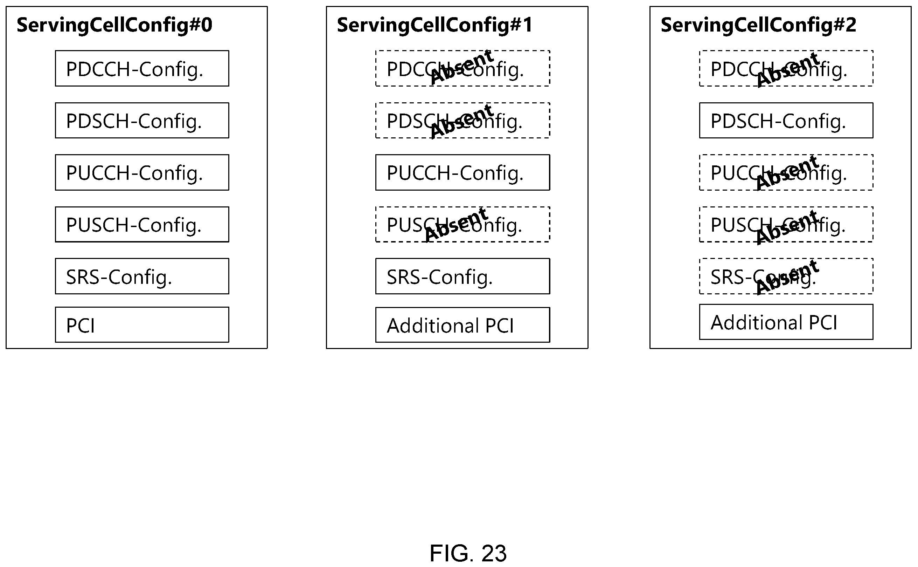

FIG. 23 is a diagram to show an example of ServingCellConfig according to the third embodiment. ServingCellConfig #0 to ServingCellConfig #2 may correspond to the example in FIG. 13, for example. ServingCellConfig #1 does not include PDCCH-Config, PDSCH-Config, nor PUSCH-Config, and a UE assumes that PDCCH-Config, PDSCH-Config, and PUSCH-Config in ServingCellConfig #0 are applied to an additional cell corresponding to ServingCellConfig #1. ServingCellConfig #2 does not include PDCCH-Config, PUCCH-Config, PUSCH-Config, nor SRS-Config, and a UE assumes that PDCCH-Config, PUCCH-Config, PUSCH-Config, and SRS-Config in ServingCellConfig #0 are applied to an additional cell corresponding to ServingCellConfig #2.

### <Fourth Embodiment>

A UE may receive, with a MAC CE, a parameter (for example, Cell Radio Network Temporary Identifier (C-RNTI)) different per additional cell (additional PCI, candidate cell) and be configured with the parameter.

### {Embodiment 4-1}

### <<Option 1>>

No MAC entity reset for L1/L2 inter-cell mobility is provided, and thus the C-RNTI need not be changed.

### <<Option 2>>

A UE may receive, with a MAC CE, C-RNTIs related to additional PCIs (related to an SpCell). In a case where the SpCell is switched, the UE performs transmission/reception by applying a new C-RNTI related to a new SpCell, out of the C-RNTIs in the MAC CE.

For the UE, similarly, in the case where the SpCell is switched, the UE may receive a new C-RNTI configuration (for example, a periodic CSI-RS configuration in a case of TRS) related to a new SpCell and apply the configuration. In other words, a CSI-RS configuration may differ depending on a candidate cell. An L1 beam measurement/report configuration or a CSI measurement/report configuration may differ depending on an additional cell (candidate cell) and may be configured in advance per candidate cell.

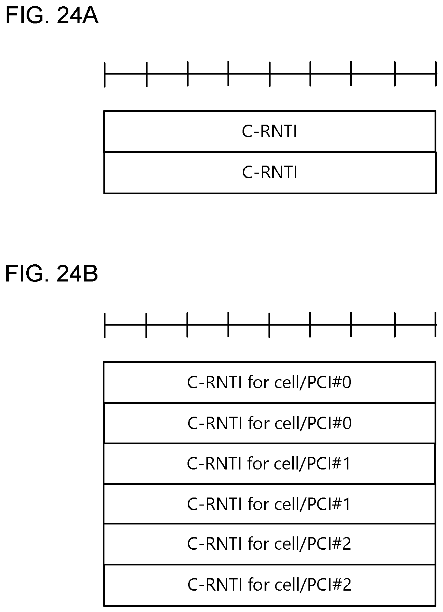

FIG. 24A is a diagram to show a C-RNTI MAC CE in Rel. 16. As shown in FIG. 24A, the MAC CE includes one C-RNTI of 16 bits.

FIG. 24B is a diagram to show a C-RNTI MAC CE according to a fourth embodiment. As shown in FIG. 24B, the MAC CE includes one C-RNTI (16 bits) per cell/PCI. Note that the number of C-RNTIs to be configured is not limited to the example in FIG. 24B.

### {Variations}

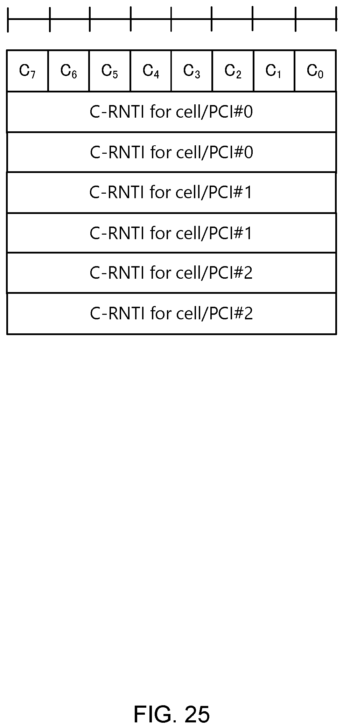

FIG. 25 is a diagram to show a C-RNTI MAC CE of a variation of the fourth embodiment. Similarly to FIG. 24A, the MAC CE includes, per cell/PCI, one C-RNTI of 16 bits. Cₓ (C₁ to C₇) indicates whether a C-RNTI for each cell/PCI is indicated. For example, in a case where Cₓ is 0, a C-RNTI of the corresponding cell/PCI is indicated and, in a case where Cₓ is 1, this means that no C-RNTI of the corresponding cell/PCI is indicated (no octet of the corresponding cell/PCI is present). For example, in a case where C (eight bits for C₁ to C₇) is 00000101, C-RNTIs of cells/PCIs #0 and #2 are indicated.

Even if different (plurality of) additional cells/PCIs share the same ServingCellConfig, some of (a limited part of) the parameters may be configured per additional cell/PCI.

### {Embodiment 4-2}

A plurality of C-RNTI values may be configured for a UE by using higher layer signaling (for example, RRC/MAC CE). In a case where switch of an SpCell to an additional cell/PCI is indicated or such switch is completed, the UE may update a new C-RNTI related to the additional cell/PCI and perform reception of a DL signal and transmission of a UL signal.

For example, (1) or (2) below may be applied.
(1) Configuration/indication of a plurality of C-RNTI values by higher layer signaling is applied also to cell #0 (a serving cell before switch).
(2) Configuration/indication of a plurality of C-RNTI values by higher layer signaling is applicable only to Cells #1, #2, #3, ... (additional/candidate cells). A UE may acquire configuration/indication of a C-RNTI value of Cell #0 by an existing C-RNTI MAC CE.

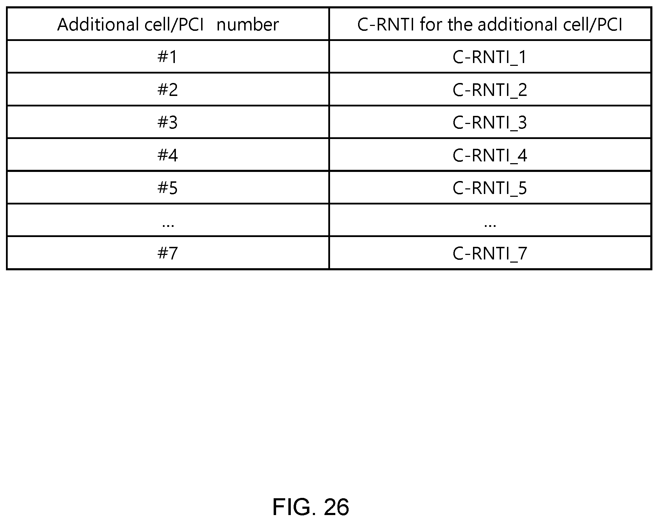

FIG. 26 is a diagram to show a configuration example of a C-RNTI according to Embodiment 4-2. FIG. 26 corresponds to (2) described above. As shown in FIG. 26, for Cells #1, #2, #3, ... #7 (additional/candidate cells), the respective C-RNTIs may be configured for a UE by higher layer signaling. In a case of applying (1) described above, a C-RNTI of cell #0 (a serving cell before switch) may further be configured.

After serving cell switch by an L1/L2, in a case where there is no PRACH procedure to a new serving cell, a UE may acquire a new C-RNTI by using a method of the present embodiment. In a case where a PRACH procedure occurs, the UE may acquire a C-RNTI by a C-RNTI MAC CE similarly to an existing specification (for example, Rel. 16).

Alternatively, regardless of presence/absence of an RACH procedure to a new serving cell (reception of a C-RNTI MAC CE for the new serving cell), a UE may apply a C-RNTI configured/indicated in the present embodiment.

### <Supplements>

### {Notification of Information to UE}

Notification of any information (from a network (NW) (for example, base station (BS))) to a UE in the embodiment described above (in other words, reception of any information by the UE from the BS) may be performed by using physical layer signaling (for example, DCI), higher layer signaling (for example, RRC signaling, MAC CE), a specific signal/channel (for example, PDCCH, PDSCH, reference signal), or a combination of these.

In a case where such notification is made by a MAC CE, the MAC CE may be identified by a fact that a new logical channel ID (LCID) not defined in any existing specifications is included in a MAC sub-header.

In a case where the notification is made by DCI, the notification may be made by a specific field of the DCI, a radio network temporary identifier (RNTI) used for scrambling of cyclic redundancy check (CRC) bits added to the DCI, a format of the DCI, or the like.

Notification of any information to a UE in the above-described embodiment may be made periodically, semi-persistently, or aperiodically.

### {Notification of Information from UE}

Notification of any information (to an NW) from a UE in the embodiment described above (in other words, transmission/reporting of any information from the UE to a BS) may be performed by using physical layer signaling (for example, UCI), higher layer signaling (for example, RRC signaling, MAC CE), a specific signal/channel (for example, PUCCH, PUSCH, PRACH, reference signal), or a combination of these.

In a case where such notification is made by a MAC CE, the MAC CE may be identified by a fact that a new LCID not defined in any existing specifications is included in a MAC sub-header.

In a case where the notification is made by UCI, the notification may be transmitted by using a PUCCH or PUSCH.

Notification of any information from a UE in the above-described embodiment may be made periodically, semi-persistently, or aperiodically.

### {Application of Embodiments}

At least one of the above-described embodiments may be applied to a case where a specific condition is met. The specific condition may be defined in a specification or may be notified for a UE/BS by using higher layer signaling/physical layer signaling.

At least one of the above-described embodiments may be applied only to a UE that has reported a specific UE capability or that supports the specific UE capability.

The specific UE capability may indicate at least one of the following:
- Support of specific processing/operation/control/information for at least one of the above-described embodiments
- Support of simultaneous switching of a plurality of serving cells
- The maximum number of serving cells to be switched at once
- Whether a plurality of serving cells are limited to Scells
- The number of pieces of ServingCellConfig configured per CC or configured over CCs (the first embodiment)
- Support of one-to-multiple association between ServingCellConfig and PCIs (the first embodiment)
- Which of Embodiment 1-1 (application of ServingCellConfig common to different CCs) or Embodiment 1-2 (application of separate ones of ServingCellConfig for different CCs) is to be supported
- Support of configuration of different BWPs for different cells/PCIs (Embodiment 2-2)
- Support of processing/operation/control/information of the third embodiment (additional cell/PCI)

The specific UE capability may be a capability applied over all the frequencies (commonly irrespective of frequency), may be a capability per frequency (for example, any one of a cell, a band, a band combination, a BWP, a component carrier, and the like, or a combination of these), may be a capability per frequency range (for example, FR1, FR2, FR3, FR4, FR5, FR2-1, FR2-2), may be a capability per subcarrier spacing (SCS), or may be a capability per Feature Set (FS) or Feature Set Per Component-carrier (FSPC).

The specific UE capability may be a capability applied over all the duplex schemes (commonly irrespective of duplex scheme) or a capability per duplex scheme (for example, time division duplex (TDD) or frequency division duplex (FDD)).

At least one of the above-described embodiments may be applied to a case where specific information related to any one of the above-described embodiments (or performing of operations of any one of the above-described embodiments) is configured/activated/triggered for a UE by higher layer signaling/physical layer signaling.

When not supporting at least one of the specific UE capabilities or not configured with the specific information, the UE may apply operations in Rel. 15/16, for example.

### (Supplementary Note)

Regarding one embodiment of the present disclosure, the following supplementary notes of the invention will be given.

### {Supplementary Note 1}

A terminal including:
a receiving section that receives one or more serving cell configurations for a serving cell and an additional cell; and
a control section that controls, based on the one or more serving cell configurations, transmission/reception to/from at least one of the serving cell and the additional cell, wherein
each of the one or more serving cell configurations includes a plurality of bandwidth part (BWP) related configurations and each of the plurality of BWP related configurations corresponds to at least one of the serving cell and the additional cell.

### {Supplementary Note 2}

The terminal according to supplementary note 1, wherein
for the additional cell, the receiving section receives, by higher layer signaling, indication indicating which BWP related configuration to be used out of the plurality of BWP related configurations.

### {Supplementary Note 3}

The terminal according to supplementary note 1 or 2, wherein
in a case where a specific parameter is not configured for a serving cell configuration for an additional cell, the control section uses, for the specific parameter, for the additional cell, a parameter the same as a parameter for the serving cell.

### {Supplementary Note 4}

The terminal according to any one of supplementary notes 1 to 3, wherein
the receiving section receives, with a media access control control element (MAC CE), a configuration of a Cell Radio Network Temporary Identifier (C-RNTI) that differs depending on the additional cell.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

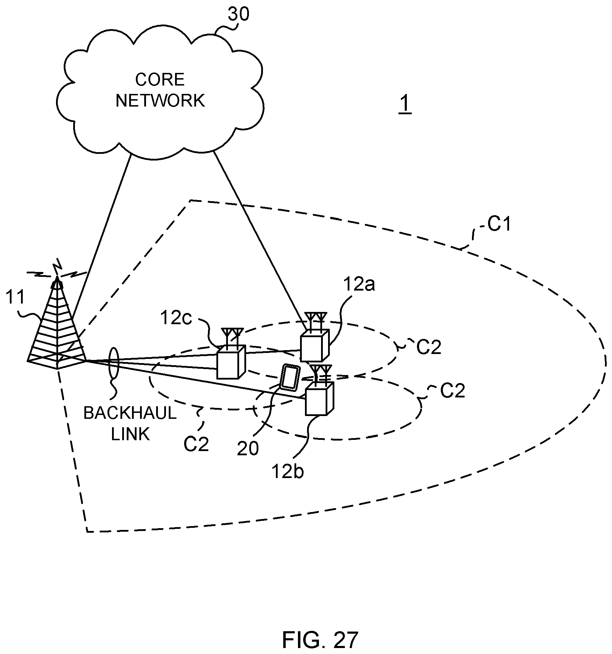

FIG. 27 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR), or the like the specification of which has been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and the like.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface, or the like) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include, for example, network functions (NFs) such as a User Plane Function (UPF), an Access and Mobility management Function (AMF), a Session Management Function (SMF), a Unified Data Management (UDM), ApplicationFunction (AF), a Data Network (DN), a Location Management Function (LMF), and a maintenance and operation management (Operation, Administration and Maintenance (Management) (OAM)). Note that one network node may provide a plurality of functions. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

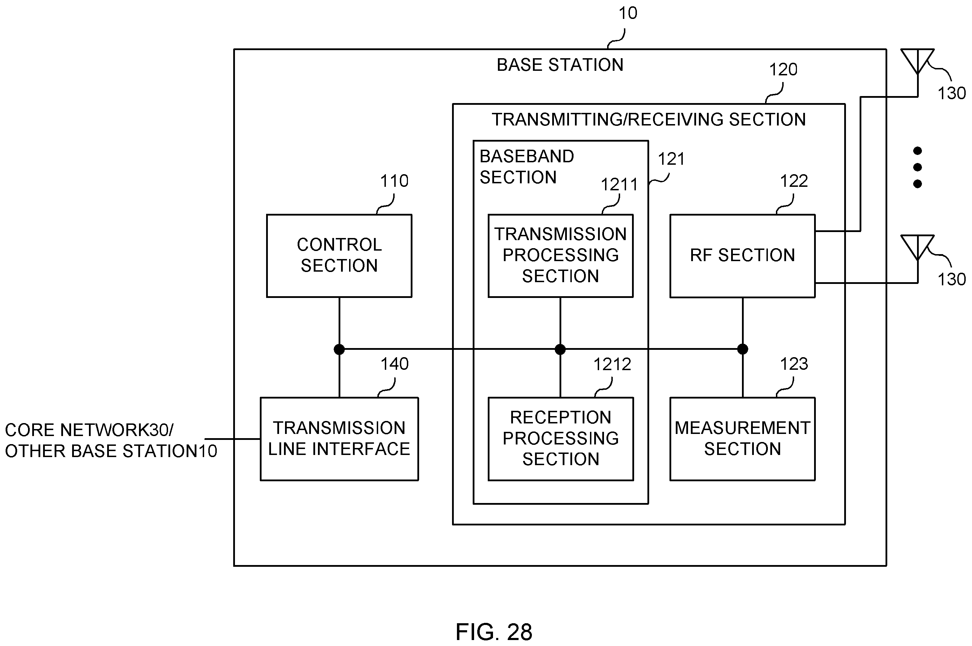

FIG. 28 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal to/from an apparatus (for example, a network node that provides an NF) included in the core network 30, another base station 10, or the like, and perform acquisition, transmission, or the like of user data (user plane data), control plane data, or the like for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit one or more serving cell configurations for a serving cell and an additional cell. The control section 110 may control, based on the one or more serving cell configurations, transmission/reception to/from at least one of the serving cell and the additional cell.

Each of the one or more serving cell configurations may be a configuration related to a plurality of additional cells or a configuration related to one serving cell and one or more additional cells.

Each of the one or more serving cell configurations may include a plurality of bandwidth part (BWP) related configurations and each of the BWP related configurations may correspond to at least one of the serving cell and the additional cell.

### (User Terminal)

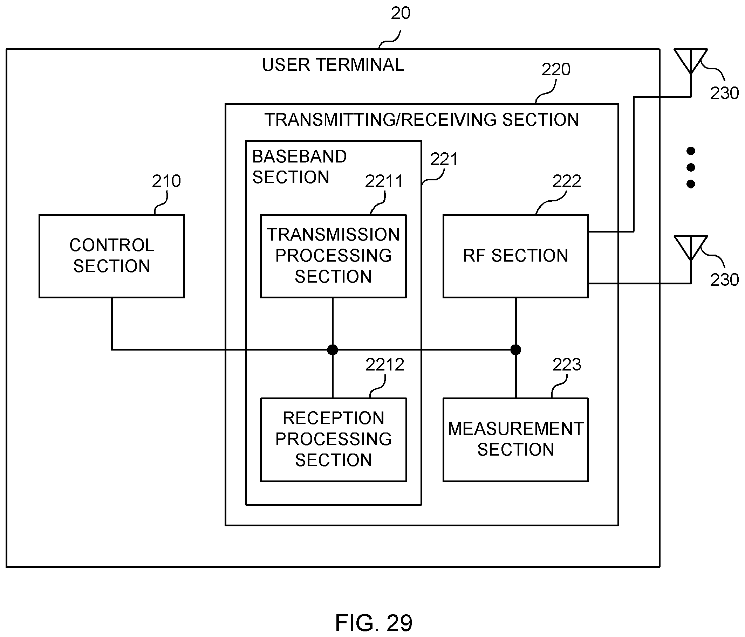

FIG. 29 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive one or more serving cell configurations for a serving cell and an additional cell. The control section 210 may control, based on the one or more serving cell configurations, transmission/reception to/from at least one of the serving cell and the additional cell.

Each of the one or more serving cell configurations may be a configuration related to a plurality of additional cells or a configuration related to one serving cell and one or more additional cells.

The same serving cell configuration may be shared by different component carriers. Separate serving cell configurations may be configured for different component carriers.

Each of the one or more serving cell configurations may include a plurality of bandwidth part (BWP) related configurations and each of the BWP related configurations may correspond to at least one of the serving cell and the additional cell.

For the additional cell, the transmitting/receiving section 220 may receive, by higher layer signaling, indication indicating which BWP related configuration to be used out of the plurality of BWP related configurations.

In a case where a specific parameter is not configured for a serving cell configuration for an additional cell, the control section 210 may use, for the specific parameter, for the additional cell, a parameter the same as that for the serving cell.

The transmitting/receiving section 220 may receive, with a media access control control element (MAC CE), a configuration of a Cell Radio Network Temporary Identifier (C-RNTI) that differs depending on the additional cell.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

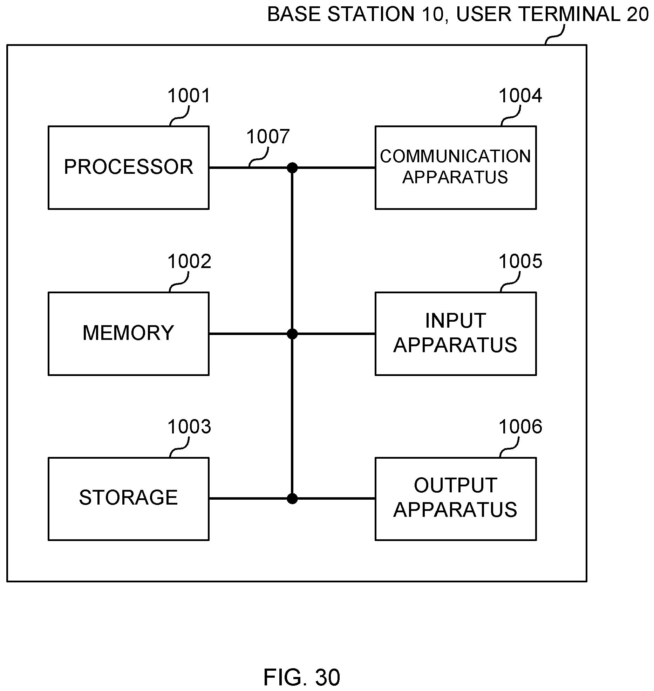

For example, a base station, a user terminal, and so on according to one embodiment of the present disclosure may function as a computer that executes the processes of the radio communication method of the present disclosure. FIG. 30 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, or the like may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs).

Also, notification of certain information (for example, reporting of "being X") does not necessarily have to be notified explicitly, and can be notified implicitly (by, for example, not notifying this certain information or notifying another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, a case that a base station transmits information to a terminal and a case that the base station indicates, to the terminal, control/operation based on the information may be interchangeably interpreted.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

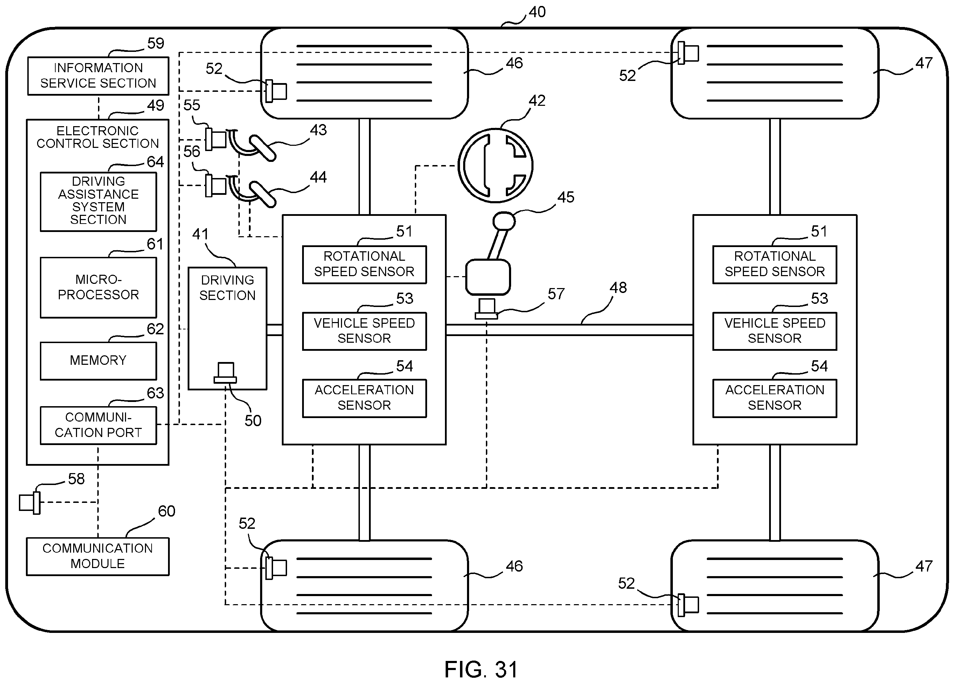

FIG. 31 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device **(D2D),"** "Vehicle-to-Everything **(V2X),"** and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of operations. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some operations.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

In the present disclosure, "equal to or smaller than," "smaller than," "equal to or larger than," "larger than," "equal to," and the like may be interchangeably interpreted. In the present disclosure, words such as "good," "poor," "large," "small," "high," "low," "early," "late," "wide," "narrow," and the like may be interchangeably interpreted irrespective of positive degree, comparative degree, and superlative degree. In the present disclosure, expressions obtained by adding "i-th" (i is any integer) to words such as "good," "poor," "large," "small," "high," "low," "early," "late," "wide," "narrow," and the like may be interchangeably interpreted irrespective of positive degree, comparative degree, and superlative degree (for example, "highest" may be interpreted as "i-th highest," and vice versa).

In the present disclosure, "of," "for," "regarding," "related to," "associated with," and the like may be interchangeably interpreted.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives one or more serving cell configurations for a serving cell and an additional cell; and
a control section that controls, based on the one or more serving cell configurations, transmission/reception to/from at least one of the serving cell and the additional cell, wherein
each of the one or more serving cell configurations includes a plurality of bandwidth part (BWP) related configurations and each of the plurality of BWP related configurations corresponds to at least one of the serving cell and the additional cell.

2. The terminal according to claim 1, wherein
for the additional cell, the receiving section receives, by higher layer signaling, indication indicating which BWP related configuration to be used out of the plurality of BWP related configurations.

3. The terminal according to claim 1, wherein
in a case where a specific parameter is not configured for a serving cell configuration for an additional cell, the control section uses, for the specific parameter, for the additional cell, a parameter the same as a parameter for the serving cell.

4. The terminal according to claim **1,** wherein
the receiving section receives, with a media access control control element (MAC CE), a configuration of a Cell Radio Network Temporary Identifier (C-RNTI) that differs depending on the additional cell.

5. A radio communication method for a terminal, the radio communication method comprising:
receiving one or more serving cell configurations for a serving cell and an additional cell; and
controlling, based on the one or more serving cell configurations, transmission/reception to/from at least one of the serving cell and the additional cell, wherein
each of the one or more serving cell configurations includes a plurality of bandwidth part (BWP) related configurations and each of the plurality of BWP related configurations corresponds to at least one of the serving cell and the additional cell.

6. A base station comprising:
a transmitting section that transmits one or more serving cell configurations for a serving cell and an additional cell; and
a control section that controls, based on the one or more serving cell configurations, transmission/reception to/from at least one of the serving cell and the additional cell, wherein
each of the one or more serving cell configurations includes a plurality of bandwidth part (BWP) related configurations and each of the plurality of BWP related configurations corresponds to at least one of the serving cell and the additional cell.
